# EUROPÄISCHE PATENTANMELDUNG

(11) **EP 4 588 725 A1**
(43) Veröffentlichungstag der Anmeldung: **23.07.2025**
(21) Anmeldenummer: 25151907.0
(22) Anmeldetag: 15.01.2025
(51) Int. Cl.: B60R 19/03

(54) **QUERTRÄGER**

(30) Priorität: 18.01.2024 DE 102024101410
(71) Anmelder: ACPS Automotive GmbH, 74379 Ingersheim (DE)
(72) Erfinder: Pietschmann, Ralf, 74369 Löchgau (DE)
(74) Vertreter: Hoeger, Stellrecht & Partner Patentanwälte mbB

(57) **Zusammenfassung**

Um einen aufprallaufnehmender Querträger, der unter einer Stoßfängereinheit einer Fahrzeugkarosserie an einem Fahrzeugheck derselben montierbar ist, wobei der Querträger sich in einer ungefähr parallel zur Stoßfängereinheit verlaufenden Querrichtung erstreckt und endseitig angeordnete Stützelemente zur Abstützung an Stützbereichen des Fahrzeughecks aufweist und wobei die Stützelemente durch eine Zentraleinheit des Querträgers miteinander verbunden sind, derart zu verbessern, dass dieser möglichst einfach und somit möglichst kostengünstig herstellbar ist, wird vorgeschlagen, dass die Zentraleinheit eine Wandelemente umfassende kastenförmige Struktur aufweist und dass mindestens eines der Wandelemente der kastenförmigen Struktur sich ausgehend von diesem einstückig bis in die Stützelemente erstreckende Ausläufer aufweist, die ein Strukturelement der Stützelemente bilden.

## Beschreibung

Die Erfindung betrifft einen aufprallaufnehmenden Querträger, der unter einer Stoßfängereinheit einer Fahrzeugkarosserie an einem Fahrzeugheck derselben montierbar ist, wobei der Querträger sich in einer ungefähr parallel zur Stoßfängereinheit verlaufenden Querrichtung erstreckt und endseitig angeordnete Stützelemente zur Abstützung an Stützbereichen des Fahrzeughecks aufweist und wobei die Stützelemente durch eine Zentraleinheit des Querträgers miteinander verbunden sind.

Derartige Querträger sind aus dem Stand der Technik bekannt.

Bei diesen sind die Stützelemente als separate Elemente ausgebildet, die durch verschiedenste Verbindungstechniken mit der Zentraleinheit verbunden sind.

Derartige Konstruktionen sind aufwändig und somit kostenintensiv.

Der Erfindung liegt daher die Aufgabe zugrunde, einen Querträger der eingangs beschriebenen Art derart zu verbessern, dass dieser möglichst einfach und somit möglichst kostengünstig herstellbar ist.

Diese Aufgabe wird bei einem Querträger der eingangs beschriebenen Art erfindungsgemäß dadurch gelöst, dass die Zentraleinheit eine Wandelemente umfassende kastenförmige Struktur aufweist und das mindestens eines der Wandelemente der kastenförmigen Struktur sich ausgehend von dieser einstückig bis in die Stützelemente erstreckende Ausläufer aufweist, die ein Strukturelement der Stützelemente bilden.

Mit der erfindungsgemäßen Lösung besteht somit die Möglichkeit, in einfacher Weise eine Verbindung zwischen der Zentraleinheit und den Stützelementen zu schaffen, ohne dass hierzu Verbindungstechniken erforderlich sind.

In der nachfolgenden Beschreibung ist unter einem ungefähr parallelen Verlauf ein Verlauf zu verstehen, der um einen Winkel von bis zu ±30°, vorzugsweise bis zu ±20°, von einem parallelen Verlauf abweichen kann.

Besonders günstig ist es, wenn mindestens zwei einander gegenüberliegende Wandelemente der kastenförmigen Struktur sich mit ihren Ausläufern einstückig bis in die Stützelemente erstrecken und zumindest Teile der Struktur der Stützelemente bilden.

Noch vorteilhafter ist es, wenn mindestens drei Wandelemente der kastenförmigen Struktur sich mit ihren Ausläufern einstückig bis in die Stützelemente erstrecken und zumindest Teile der Struktur der Stützelemente bilden.

Eine besonders günstige Lösung sieht vor, dass sämtliche Wandelemente der kastenförmigen Struktur sich mit ihren Ausläufern einstückig bis in die Stützelemente erstrecken und zumindest einen Teil der Struktur, insbesondere die Struktur, der Stützelemente bilden.

Damit ist in einfacher Weise die Möglichkeit geschaffen, den Querträger optimal und kostengünstig auszubilden und dabei eine einfach realisierbare stabile Verbindung zwischen den Stützelementen und der Zentraleinheit zu schaffen.

Insbesondere sieht eine vorteilhafte konstruktive Lösung vor, dass eines der sich einstückig bis in die Stützelemente erstreckenden Wandelemente mit seinen Ausläufern in jedem der Stützelemente mindestens eine an einem der Stützbereiche des Fahrzeughecks anlegbare Abstützfläche des Querträgers bildet.

Diese Lösung hat den großen Vorteil, dass insbesondere die Abstützung des Querträgers einstückig mit dem einen Wandelement der Zentraleinheit verbunden ist.

Besonders günstig ist es, wenn das Wandelement das fahrzeugzugewandte Wandelement der Kastenstruktur ist.

Für die Ausbildung des Querträgers hat es sich ferner als vorteilhaft erwiesen, dass die Abstützflächen des Querträgers in Bezug auf die Zentraleinheit in Richtung des Fahrzeughecks versetzt angeordnet sind, so dass bei an dem Fahrzeugheck in den Stützbereichen anliegenden Abstützflächen des Querträgers die diese bildenden Teile des mindestens einen Wandelements relativ zu dessen übrigen Teilen, insbesondere zu dem die Zentraleinheit bildenden Teil dieses mindestens einen Wandelements, in Richtung des Fahrzeughecks versetzt angeordnet ist und somit das Fahrzeugheck durch den Querträger lediglich im Bereich der Stützbereiche des Fahrzeughecks durch die Abstützflächen beaufschlagt wird.

Dies lässt sich ebenfalls auch dadurch erreichen, dass die Zentraleinheit relativ zu den Abstützflächen der Stützelemente so angeordnet ist, dass diese, insbesondere mit ihrem fahrzeugzugewandten Wandelement, bei an den Stützbereichen anliegenden Abstützflächen im Abstand von dem Fahrzeugheck verläuft.

Diese Lösungen schaffen somit die Möglichkeit, dass selbst bei einem zumindest leichten Crashaufprall auf den Querträger primär das Fahrzeugheck an den Stützbereichen beaufschlagt wird und nicht durch die Zentraleinheit selbst.

Des Weiteren ist es von Vorteil, wenn das Wandelement mit seinen Ausläufern die Abstützflächen aufweisende Stützplatten bildet.

Das heißt, dass das Wandelement selbst in der Lage ist, die die Kraft auf die Stützbereiche übertragenden Stützplatten zu bilden.

Um die Stützplatten möglichst stabil ausbilden zu können, hat es sich als vorteilhaft erwiesen, wenn die Ausläufer sich an die Stützplatten anschließende und diese versteifende Umbiegungen bilden, so dass dadurch die Stützplatten selbst aus möglichst dünnem Material, insbesondere Blechmaterial, hergestellt werden können, jedoch aufgrund der Umbiegungen eine ausreichend große Steifigkeit erhalten.

Bei einem einfachen vorteilhaften Ausführungsbeispiel ist dabei vorgesehen, dass die Stützplatten durch von den Ausläufern gebildete innere Umbiegungen mit dem Wandelement im Bereich der Kastenstruktur verbunden sind.

Bereits diese Umbiegungen tragen signifikant zur Versteifung der Stützplatten bei.

Noch besser ist es, wenn die Stützplatten auf ihren den inneren Umbiegungen gegenüberliegenden Seiten mit äußeren Umbiegungen verbunden sind, so dass die Stützplatten durch auf gegenüberliegenden Seiten liegende Umbiegungen eine Versteifung erfahren.

Eine weitere vorteilhafte Versteifung der Stützplatten ist dann erreichbar, wenn die Stützplatten mindestens eine ungefähr parallel zu der Querrichtung erstreckende Umbiegung aufweisen, vorzugsweise zwei auf gegenüberliegenden Seiten angeordnete und ungefähr parallel zu der Querrichtung erstreckende Umbiegungen.

Diese Umbiegungen, die sich somit quer zu den inneren Umbiegungen und äußeren Umbiegungen erstrecken, dienen zur allseitigen Versteifung der Stützplatten.

Als besonders günstig hat es sich erwiesen, wenn sämtliche, die Stützplatten versteifende Umbiegungen einstückig an die Stützplatten angeformt sind.

Zur Vermeidung von Belastungsbrüchen im Bereich der Umbiegungen sind vorzugsweise im Bereich derselben Durchbrüche vorgesehen, die den Umbiegungen eine begrenzte Bewegungselastizität verleihen, so dass variierende Kräfte auf die Stützplatten problemlos übertragen werden können.

Darüber hinaus sieht ein weiteres vorteilhaftes Ausführungsbeispiel vor, dass eines der Wandelemente der kastenförmigen Struktur ein fahrzeugabgewandtes, aufprallaufnehmendes Aufprallelement derselben bildet, welches sowohl im Bereich der Zentraleinheit als auch im Bereich der Stützelemente Aufprallflächen bildet und Aufprallkräfte an die weiteren Wandelemente der kastenförmigen Struktur und an die Stützelemente weiterleitet.

Dabei ist es beispielsweise denkbar, dass das aufprallaufnehmende Wandelement seinerseits eine geringe Deformierbarkeit aufweist.

Besonders vorteilhaft ist es aber auch, wenn das aufprallaufnehmende Wandelement seinerseits bereits deformierbar ist und somit in der Lage ist, bei einem Aufprall Kräfte durch Deformation aufzunehmen.

Besonders günstig ist es dabei, wenn das aufprallaufnehmende Wandelement das fahrzeugabgewandte Wandelement der kastenförmigen Struktur ist.

Des Weiteren hat es sich als vorteilhaft erwiesen, wenn das aufprallaufnehmende Aufprallelement mit mindestens einem dieses ungefähr parallel zur Fahrtrichtung abstützenden Wandelement verbunden ist, und somit an dieses Wandelement ebenfalls Aufprallkräfte weiterleiten kann.

Des Weiteren hat es sich als vorteilhaft erwiesen, wenn das mindestens eine ungefähr parallel zur Fahrtrichtung abstützende Wandelement mit dem fahrzeugzugewandten Wandelement verbunden ist.

Eine besonders günstige Lösung sieht vor, dass die kastenförmige Struktur zwei ungefähr parallel zur Fahrtrichtung abstützend wirkende und im Abstand voneinander angeordnete Wandelemente aufweist.

Ferner sieht eine weitere vorteilhafte Lösung vor, dass das mindestens eine in Fahrtrichtung abstützend wirkende Wandelement ein fahrbahnzugewandtes Wandelement des Querträgers ist.

Eine weitere vorteilhafte Lösung sieht vor, dass das mindestens eine in Fahrtrichtung abstützend wirkende Wandelement ein fahrbahnabgewandtes Wandelement des Querträgers ist.

Ferner ist vorteilhafter Weise vorgesehen, dass das mindestens eine in Fahrtrichtung abstützend wirkende Wandelement sich sowohl im Bereich der Zentraleinheit als auch im Bereich der Stützplatten abstützt.

Eine weitere besonders günstige Lösung sieht vor, dass das mindestens eine, ungefähr parallel zur Fahrtrichtung abstützend wirkende Wandelement zur Absorption von Aufprallenergie deformierbar ist.

Des Weiteren ist vorteilhafter Weise vorgesehen, dass es mindestens eine, ungefähr parallel zur Fahrtrichtung abstützend wirkende Wandelement sich im Bereich der Stützelemente mit seinen einstückigen Ausläufern sich an den Stützplatten abstützt.

Dabei können sich die Ausläufer dieses mindestens einen Wandelements beispielsweise mit ihren Seitenkanten an den Stützplatten abstützen.

Eine besonders günstige Lösung sieht jedoch vor, dass das mindestens eine ungefähr parallel zur Fahrtrichtung abstützend wirkende Wandelement sich mit seinen einstückigen Ausläufern über Stützflansche an den Stützplatten flächig abstützt.

Dabei sind die Stützflansche vorzugsweise ebenfalls einstückig an die einstückigen Ausläufer angeformt und liegen insbesondere flächig auf den Stützplatten an ihren den Abstützflächen gegenüberliegenden Seiten auf.

Besonders vorteilhaft ist es dabei, wenn die Stützflansche gemeinsam mit den Stützplatten mittels beide beaufschlagenden Montageelementen mit den Stützbereichen des Fahrzeughecks verbindbar sind.

Das heißt, dass dabei die Stützflansche zum einen zur Abstützung der Ausläufer des mindestens einen ungefähr parallel zur Fahrtrichtung abstützend wirkenden Wandelements dienen, gleichzeitig aber zusätzlich auch noch zur Stabilisierung und/oder Versteifung der Stützplatten, da die Montageelemente die Stützflansche und die Stützplatten kraftbeaufschlagt aneinander in Anlage halten.

Eine weitere vorteilhafte Ausführungsform des erfindungsgemäßen Querträgers sieht vor, dass die einstückigen Ausläufer des mindestens einen ungefähr parallel zur Fahrtrichtung abstützend wirkenden Wandelements einen diesen versteifenden Hohlkörper bilden.

Dabei kann zweckmäßigerweise der Hohlkörper nicht nur zur Versteifung der Ausläufer dieses mindestens einen Wandelements dienen, sondern gleichzeitig aber auch noch als Abstützkörper ausgebildet sein und sich an einer der Stützplatten abstützen.

Insbesondere ist dabei vorgesehen, dass der jeweilige Hohlkörper sich in Richtung der jeweiligen Stützplatte mit zunehmend erweiterndem Querschnitt erstreckt, um eine möglichst kippfreie Abstützung dieses Abstützkörpers an der jeweiligen Stützplatte zu ermöglichen.

Eine konstruktiv zweckmäßige Lösung sieht dabei vor, dass der Hohlkörper als Halbpyramide ausgebildet ist.

Eine Ausbildung des Hohlkörpers in dem jeweiligen Ausläufer lässt sich besonders einfach dadurch erreichen, dass der Hohlkörper durch mindestens dreifache Umbiegung des jeweiligen Ausläufers gebildet ist.

Ferner ist es ebenfalls zur stabilen Abstützung des Hohlkörpers von Vorteil, wenn der jeweilige Hohlkörper sich mit Flanschelementen an der jeweiligen Stützplatte abstützt.

Insbesondere ist es zur Versteifung der jeweiligen Stützplatte dabei ebenfalls von Vorteil, wenn die Flanschelemente gemeinsam mit der jeweiligen Stützplatte mittels beide beaufschlagenden Montageelementen mit den Stützbereichen des Fahrzeughecks verbindbar sind.

Ein weiteres vorteilhaftes Ausführungsbeispiel sieht vor, dass die kastenförmige Struktur mindestens ein Wandelement aufweist, das mit mindestens einem Ausschnitt versehen ist.

Derartige Ausschnitte eröffnen die Möglichkeit, noch eine weitere Gewichtsersparnis zu erreichen.

Besonders günstig ist es, wenn der mindestens eine Ausschnitt eine flächenhafte Ausdehnung aufweist, die in jeder Richtung maximal einem zweifachen der Flächenausdehnung eines diesen umgebenden Flächenbereichs in der jeweiligen Richtung entspricht, so dass jeder Ausschnitt noch mit einem ausreichend stabilisierenden Flächenbereich umgeben ist, um die Steifigkeit des Wandelements nicht signifikant zu reduzieren.

Insbesondere ist dabei vorgesehen, dass der mindestens eine Ausschnitt allseits von dem jeweiligen Flächenbereich umgeben ist.

Ferner ist vorzugsweise vorgesehen, dass der mindestens eine Ausschnitt eine Außenkontur mit einer im Wesentlichen runden und/oder ovalen Grundform aufweist, so dass bei einer Belastung des jeweiligen Wandelements im Bereich der Außenkontur des Ausschnitts keine Lastspitzen entstehen können.

Darüber hinaus ist vorzugsweise bei einem weiteren vorteilhaften Ausführungsbeispiel vorgesehen, dass der Ausschnitt bezogen auf den diesen umgebenden Flächenbereich einen relativ zu diesem Flächenbereich hochgestellten Wandbereich aufweist.

Ein derartiger hochgestellter Randbereich schafft, aufgrund seiner Erstreckung quer zu dem den Ausschnitt umgebenden Flächenbereich die Möglichkeit, den Flächenbereich noch zusätzlich zu stabilisieren.

Insbesondere ist dabei vorgesehen, dass der hochgestellte Wandbereich quer zu dem diesen umgebenden Flächenbereich eine Höhe aufweist, die mindestens dem zweifachen einer Materialdicke des diesen umgebenden Flächenbereichs entspricht.

Um die Steifigkeit der kastenförmigen Struktur zu optimieren, ist vorzugsweise vorgesehen, dass mindestens ein Teil der Wandelemente der kastenförmigen Struktur eine durch Umformungen erhöhte Steifigkeit gegen Deformationen aufweist.

Derartige Umformungen können in unterschiedlichster Art und Weise ausgebildet sein.

So sieht eine Möglichkeit vor, dass mindestens eines der Wandelemente der kastenförmigen Struktur eine parallel zu einer zur vertikalen Längsmittelebene verlaufende Biegelinie aufweist.

Eine andere vorteilhafte Lösung sieht vor, dass mindestens eines der Wandelemente mindestens eine eingeprägte Sicke aufweist.

Vorzugsweise verläuft dabei die mindestens eine eingeprägte Sicke in einer Querrichtung zur vertikalen Längsmittelebene.

Eine besonders vorteilhafte Form des erfindungsgemäßen Querträgers sieht vor, dass die Zentraleinheit derart ausgebildet ist, dass an dieser ein Anhängeelement für einen Anhänger oder einen Lastenträger montierbar ist und dass die durch das Anhängeelement auf die Zentraleinheit übertragenen Kräfte von der Zentraleinheit auf die Stützelemente und von diesen auf die Stützbereiche des Fahrzeughecks übertragen werden.

Insbesondere ist dabei vorgesehen, dass die kastenförmig ausgebildete Struktur der Zentraleinheit eine Aufnahmeeinheit für das Anhängeelement trägt.

Dabei ist vorzugsweise die Aufnahmeeinheit für das Anhängeelement in der Zentraleinheit angeordnet und somit durch diese geschützt.

Insbesondere ist dabei vorgesehen, dass die Aufnahmeeinheit für das Anhängeelement in einem Innenraum der Zentraleinheit angeordnet ist.

Eine derartige Anordnung der Aufnahmeeinheit in dem Innenraum der Zentraleinheit lässt sich beispielsweise dadurch realisieren, dass eine fahrbahnzugewandte Wand der Zentraleinheit eine Öffnung aufweist, durch welche das Anhängeelement mit der Aufnahmeeinheit in den Innenraum der Zentraleinheit einsetzbar ist.

Besonders günstig ist es dabei, wenn das Anhängeelement in seiner Arbeitsstellung die Öffnung durchgreift.

Das Anhängeelement kann dabei beispielsweise ein abnehmbares Anhängeelement sein, das mit der Aufnahmeeinheit und von der Aufnahmeeinheit lösbar ist.

Eine andere vorteilhafte Lösung sieht vor, dass das Anhängeelement relativ zu der Aufnahmeeinheit zwischen einer Arbeitsstellung und einer Ruhestellung verschwenkbar ist.

In diesem Fall ist vorzugsweise ebenfalls vorgesehen, dass das Anhängeelement in seiner Arbeitsstellung die Öffnung durchgreift und dass das Anhängeelement in einer Ruhestellung im Wesentlichen in dem Innenraum der kastenförmigen Struktur der Zentraleinheit angeordnet ist.

Die vorstehende Beschreibung erfindungsgemäßer Lösungen umfasst somit insbesondere die durch die nachfolgend durchnummerierten Ausführungsformen definierten verschiedenen Merkmalskombinationen:
1. Aufprallaufnehmender Querträger (20), der unter einer Stoßfängereinheit (16) einer Fahrzeugkarosserie (12) an einem Fahrzeugheck (14) derselben montierbar ist, wobei der Querträger (20) sich in einer ungefähr parallel zur Stoßfängereinheit (16) verlaufenden Querrichtung (58) erstreckt und endseitig angeordnete Stützelemente (54, 56) zur Abstützung an Stützbereichen (64, 66) des Fahrzeughecks (14) aufweist und wobei die Stützelemente (54, 56) durch eine Zentraleinheit (52) des Querträgers (20) miteinander verbunden sind, wobei die Zentraleinheit (52) eine Wandelemente (72, 74, 76, 78) umfassende kastenförmige Struktur (70) aufweist und dass mindestens eines der Wandelemente (72, 74, 76, 78) der kastenförmigen Struktur (70) sich ausgehend von diesem einstückig bis in die Stützelemente (54, 56) erstreckende Ausläufer (92, 94, 112, 114, 142, 144, 146, 148) aufweist, die ein Strukturelement der Stützelemente (54, 56) bilden.
2. Querträger nach Ausführungsform 1, wobei mindestens zwei einander gegenüberliegende Wandelemente der kastenförmigen Struktur (70) sich mit ihren Ausläufern (92, 94, 112, 114, 142, 144, 146, 148) einstückig bis in die Stützelemente (54, 56) erstrecken und zumindest Teile der Struktur der Stützelemente (54, 56) bilden.
3. Querträger nach Ausführungsform 2, wobei mindestens drei Wandelemente (72, 74, 76, 78) der kastenförmigen Struktur (70) sich mit ihren Ausläufern (92, 94, 112, 114, 142, 144, 146, 148) einstückig bis in die Stützelemente (54, 56) erstrecken und zumindest Teile der Struktur der Stützelemente (54, 56) bilden.
4. Querträger nach einer der voranstehenden Ausführungsformen, wobei sämtliche Wandelemente (72, 74, 76, 78) der kastenförmigen Struktur (70) sich mit ihren Ausläufern (92, 94, 112, 114, 142, 144, 146, 148) einstückig bis in die Stützelemente (54, 56) erstrecken und zumindest einen Teil der Struktur, insbesondere die Struktur, der Stützelemente (54, 56) bilden.
5. Querträger nach einer der voranstehenden Ausführungsformen, wobei eines der sich einstückig bis in die Stützelemente (54, 56) erstreckenden Wandelemente (72) mit seinen Ausläufern (92, 94) in jedem der Stützelemente (54, 56) mindestens eine an einem der Stützbereiche (64, 66) des Fahrzeughecks (14) anlegbare Abstützfläche (106, 108) des Querträgers (20) bildet.
6. Querträger nach Ausführungsform 5, wobei das Wandelement (72) das fahrzeugzugewandte Wandelement (72) der Kastenstruktur (70) ist.
7. Querträger nach einer der Ausführungsformen 5 oder 6, wobei die Abstützflächen (106, 108) des Querträgers (20) in Bezug auf die Zentraleinheit (52) in Richtung des Fahrzeughecks (14) versetzt angeordnet sind.
8. Querträger nach einer der Ausführungsformen 5 bis 7, wobei die Zentraleinheit (52) relativ zu den Abstützflächen (106, 108) der Stützelemente (54, 56) so angeordnet ist, dass diese, insbesondere mit ihrem fahrzeugzugewandten Wandelement (72), bei an den Stützbereichen (64, 66) anliegenden Abstützflächen (106, 108) im Abstand von dem Fahrzeugheck (14) verläuft.
9. Querträger nach einer der Ausführungsformen 5 bis 8, wobei das Wandelement (72) mit seinen Ausläufern (92, 94) die Abstützflächen (106, 108) aufweisende Stützplatten (102, 104) bildet.
10. Querträger nach Ausführungsform 9, wobei die Ausläufer (92, 94) sich an die Stützplatten (102, 104) anschließende und diese versteifende Umbiegungen (96, 98, 112, 114, 132, 134, 136, 138) bilden.
11. Querträger nach Ausführungsform 9 oder 10, wobei die Stützplatten (102, 104) durch von den Ausläufern (92, 94) gebildete innere Umbiegungen (96, 98) mit dem Wandelement (72) im Bereich der Kastenstruktur (70) verbunden sind.
12. Querträger nach Ausführungsform 11, wobei die Stützplatten (102, 104) auf ihrer den inneren Umbiegungen (96, 98) gegenüberliegenden Seiten mit äußeren Umbiegungen (112, 114) verbunden sind.
13. Querträger nach einer der Ausführungsformen 10 bis 12, wobei die Stützplatten (102, 104) mindestens eine ungefähr parallel zu der Querrichtung (58) erstreckende Umbiegung (132, 134, 136, 138) aufweisen.
14. Querträger nach einer der voranstehenden Ausführungsformen, wobei eines der Wandelemente (74) der kastenförmigen Struktur (70) ein aufprallaufnehmendes Aufprallelement derselben bildet, welches sowohl im Bereich der Zentraleinheit (52) als auch im Bereich der Stützelemente (54, 56) Aufprallflächen bildet und Aufprallkräfte an weitere Wandelemente (72, 76, 78) der kastenförmigen Struktur (70) und an die Stützelemente (54, 56) weiterleitet.
15. Querträger nach Ausführungsform 14, wobei das aufprallaufnehmende Wandelement (74) seinerseits deformierbar ist.
16. Querträger nach Ausführungsform 14 oder 15, wobei das aufprallaufnehmende Wandelement (74) das fahrzeugabgewandte Wandelement (74) der kastenförmigen Struktur (70) ist.
17. Querträger nach einer der Ausführungsformen 14 bis 16, wobei das aufprallaufnehmende Wandelement (74) mit mindestens einem dieses ungefähr parallel zur Fahrtrichtung abstützenden Wandelement (76, 78) verbunden ist.
18. Querträger nach Ausführungsform 17, wobei das mindestens eine ungefähr parallel zur Fahrtrichtung abstützende Wandelement (76, 78) mit dem fahrzeugzugewandten Wandelement (72) verbunden ist.
19. Querträger nach Ausführungsform 17 oder 18, wobei die kastenförmige Struktur (70) zwei ungefähr parallel zur Fahrtrichtung abstützend wirkende und im Abstand voneinander angeordnete Wandelemente (76, 78) aufweist.
20. Querträger nach einer der Ausführungsformen 17 bis 19, wobei mindestens eine in Fahrtrichtung abstützend wirkende Wandelement (76) ein fahrbahnzugewandtes Wandelement (76) des Querträgers (20) ist.
21. Querträger nach einer der Ausführungsformen 17 bis 20, wobei das mindestens eine in Fahrtrichtung abstützend wirkende Wandelement (78) ein fahrbahnabgewandtes Wandelement (78) des Querträgers ist.
22. Querträger nach einem der voranstehenden Ausführungsformen, dadurch gekennzeichnet, dass das mindestens eine in Fahrtrichtung abstützend wirkende Wandelement (76, 78) sich sowohl im Bereich der Zentraleinheit (52) als auch im Bereich der Stützelemente (54, 56) abstützt.
23. Querträger nach einer der Ausführungsformen 17 bis 22, wobei das mindestens eine ungefähr parallel zur Fahrtrichtung abstützend wirkende Wandelement (76, 78) zur Absorption von Aufprallenergie deformierbar ist.
24. Querträger nach einer der voranstehenden Ausführungsformen, wobei das mindesten eine ungefähr parallel zur Fahrtrichtung abstützend wirkende Wandelement (76, 78) sich im Bereich der Stützelemente (54, 56) mit seinen einstückigen Ausläufern (142, 144, 146, 148) sich an den Stützplatten (102, 104) abstützt.
25. Querträger nach Ausführungsform 24, wobei das mindestens eine ungefähr parallel zur Fahrtrichtung abstützend wirkende Wandelement (76, 78) sich mit seinen einstückigen Ausläufern (142, 144, 146, 148) über Stützflansche (152, 154, 156, 158) an den Stützplatten (102, 104) flächig abstützt.
26. Querträger nach Ausführungsform 25, wobei die Stützflansche (152, 154, 156, 158) gemeinsam mit den Stützplatten (102, 104) mittels beide beaufschlagenden Montagelementen (162, 164) mit den Stützbereichen (64, 66) des Fahrzeughecks (14) verbindbar sind.
27. Querträger nach einer der Ausführungsformen 19 bis 26, wobei die einstückigen Ausläufer (142, 144, 146, 148) des mindesten einen ungefähr parallel zur Fahrtrichtung abstützend wirkenden Wandelements (76, 78) einen diesen versteifenden Hohlkörper (302, 304, 306, 308) bilden.
28. Querträger nach Ausführungsform 27, wobei jeweils ein Hohlkörper (302, 304, 306, 308) als Abstützkörper ausgebildet ist und sich an einer der Stützplatten (102, 104) abstützt.
29. Querträger nach Ausführungsform 28, wobei der jeweilige Hohlkörper (302, 304, 306, 308) sich in Richtung der jeweiligen Stützplatte (102, 104) mit zunehmend erweiterndem Querschnitt erstreckt.
30. Querträger nach Ausführungsform 28 oder 29, wobei der Hohlkörper (302, 304, 306, 308) als Halbpyramide ausgebildet ist.
31. Querträger nach einer der Ausführungsformen 24 bis 30, wobei der Hohlkörper (302, 304, 306, 308) durch mindestens dreifache Umbiegung des jeweiligen Ausläufers (142, 144, 146, 148) gebildet ist.
32. Querträger nach einer der Ausführungsformen 27 bis 31, wobei der jeweilige Hohlkörper (302, 304, 306, 308) sich mit Flanschelementen (312, 314, 316, 318, 322, 324, 326, 328) an der jeweiligen Stützplatte (102, 104) abstützt.
33. Querträger nach Ausführungsform 32, wobei die Flanschelemente (312, 314, 316, 318, 322, 324, 326, 328) gemeinsam mit der jeweiligen Stützplatte (102, 104) mittels beide beaufschlagenden Montageelementen (162, 164) mit den Stützbereichen (64, 66) des Fahrzeughecks (14) verbindbar sind.
34. Querträger nach einer der voranstehenden Ausführungsformen, wobei die kastenförmige Struktur (70) mindestens ein Wandelement (72, 74, 76, 78) aufweist, das mit mindestens einem Ausschnitt (372, 374, 376, 384, 392, 394, 402, 404) versehen ist.
35. Querträger nach Ausführungsform 34, wobei der mindestens eine Ausschnitt (372, 374, 376, 378, 384, 392, 394, 402, 404) eine flächenhafte Ausdehnung aufweist, die in jeder Richtung maximal einem 2-fachen der Flächenausdehnung eines diesen umgebenden Flächenbereichs (373, 375, 377, 383, 385, 393, 403, 405) in der jeweiligen Richtung entspricht.
36. Querträger nach Ausführungsform 34 oder 35, wobei der mindestens eine Ausschnitt (372, 374, 376, 384, 392, 394, 402, 404) allseits von dem Flächenbereich (373, 375, 377, 383, 385, 393, 403, 405) umgeben ist.
37. Querträger nach einer der Ausführungsformen 34 bis 36, wobei der mindestens eine Ausschnitt (372, 374, 376, 384, 392, 394, 402, 404) eine Außenkontur mit einer im Wesentlichen runden und/oder ovalen Grundform aufweist.
38. Querträger nach einer der Ausführungsform 34 bis 37, wobei der mindestens eine Ausschnitt (402, 404) bezogen auf den diesen umgebenden Flächenbereich (403, 405) einen relativ zu diesem Flächenbereich (403, 405) hochgestellten Randbereich (412, 414) aufweist.
39. Querträger nach Ausführungsform 38, wobei der hochgestellte Randbereich (412) quer zu dem diesen umgebenden Flächenbereich (403) eine Höhe aufweist, die mindestens dem zweifachen einer Materialdicke des diesen umgebenden Flächenbereichs (403) entspricht.
40. Querträger nach einer der voranstehenden Ausführungsformen, wobei mindestens ein Teil der Wandelemente (72, 74, 76, 78) der kastenförmigen Struktur (70) eine durch Umformungen erhöhte Steifigkeit gegen Deformationen aufweist.
41. Querträger nach Ausführungsform 40, wobei mindestens eines der Wandelemente (72, 74, 76, 78) der kastenförmigen Struktur (70) eine ungefähr parallel zu einer zur vertikalen Längsmittelebene (FL) verlaufende Biegelinie (88) aufweist.
42. Querträger nach Ausführungsform 40 oder 41, wobei mindestens eines der Wandelemente (72, 74, 76, 78) mindestens eine eingeprägte Sicke (172, 174) aufweist.
43. Querträger nach Ausführungsform 42, wobei mindestens eine der Wände (72, 74, 76, 78) mindestens eine eingeprägte Sicke (172, 174) aufweist, die sich in einer Querrichtung (58) zur vertikalen Längsmittelebene (FL) erstreckt.
44. Querträger nach einer der voranstehenden Ausführungsformen, wobei die Zentraleinheit (52) derart ausgebildet ist, dass an dieser ein Anhängeelement (40) für einen Anhänger oder einen Lastenträger montierbar ist und dass die durch das Anhängeelement (40) auf die Zentraleinheit (52) übertragenen Kräfte von der Zentraleinheit (52) auf die Stützelemente (54, 56) und von diesen auf die Stützbereiche (64, 66) des Fahrzeughecks (14) übertragen werden.
45. Querträger nach Ausführungsform 44, wobei die kastenförmig ausgebildete Struktur (70) der Zentraleinheit (52) eine Aufnahmeeinheit (220) für das Anhängeelement (40) trägt.
46. Querträger nach Ausführungsform 45, wobei die Aufnahmeeinheit (220) für das Anhängeelement (40) in der Zentraleinheit (52) angeordnet ist.
47. Querträger nach einer der Ausführungsformen 44 bis 46, wobei die Aufnahmeeinheit (220) für das Anhängeelement (40) in einem Innenraum (82) der Zentraleinheit (52) angeordnet ist.
48. Querträger nach Ausführungsform 47, wobei eine fahrbahnzugewandte Wand (76) der Zentraleinheit (52) eine Öffnung (84) aufweist, durch welche das Anhängeelement (40) mit der Aufnahmeeinheit (220) in den Innenraum (82) einsetzbar ist.
49. Querträger nach einer der Ausführungsformen 44 bis 48, wobei das Anhängeelement (40) in seiner Arbeitsstellung (A) die Öffnung (84) durchgreift.
50. Querträger nach einer der Ausführungsformen 44 bis 49, wobei das Anhängeelement (40) in einer Ruhestellung (R) im Wesentlichen in dem Innenraum (82) der kastenförmigen Struktur (70) der Zentraleinheit (52) angeordnet ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines Kraftfahrzeugs mit einem erfindungsgemäßen Querträger, der mit einer Anhängekupplung versehen ist, wobei die Seitenansicht im Bereich des Querträgers teilweise aufgebrochen dargestellt ist;
- Fig. 2: eine perspektivische Ansicht in Fahrtrichtung eines Querträgers gemäß einem ersten Ausführungsbeispiel;
- Fig. 3: eine Draufsicht des Querträgers in Fahrtrichtung gemäß dem ersten Ausführungsbeispiel;
- Fig. 4: eine Draufsicht auf eine fahrbahnabgewandte Seite des erfindungsgemäßen Querträgers gemäß dem ersten Ausführungsbeispiel;
- Fig. 5: eine perspektivische Ansicht entgegengesetzt zur Fahrtrichtung des erfindungsgemäßen Querträgers gemäß dem ersten Ausführungsbeispiel;
- Fig. 6: eine Draufsicht entgegengesetzt zur Fahrtrichtung auf den erfindungsgemäßen Querträger gemäß dem ersten Ausführungsbeispiel;
- Fig. 7: eine Draufsicht auf eine fahrbahnzugewandte Seite des Querträgers gemäß dem ersten Ausführungsbeispiel;
- Fig. 8: eine Draufsicht ähnlich Fig. 4 auf das erste Ausführungsbeispiel des erfindungsgemäßen Querträgers bei aufgebrochenem fahrbahnabgewandtem Wandelement, versehen mit einem schwenkbaren Anhängeelement in Arbeitsstellung;
- Fig. 9: eine perspektivische Ansicht des erfindungsgemäßen Querträgers gemäß dem ersten Ausführungsbeispiel entsprechend Fig. 5 bei dem in der Arbeitsstellung stehendem schwenkbaren Anhängeelement;
- Fig. 10: eine perspektivische Ansicht des erfindungsgemäßen Querträgers gemäß dem ersten Ausführungsbeispiel entsprechend Fig. 9 bei dem in Ruhestellung stehendem schwenkbaren Anhängeelement;
- Fig. 11: eine Draufsicht entsprechend Fig. 4 auf den Querträger gemäß dem ersten Ausführungsbeispiel, bei teilweise aufgebrochenem fahrbahnabgewandtem Wandelement, dargestellt mit einem abnehmbaren Anhängeelement;
- Fig. 12: eine perspektivische Ansicht in Fahrtrichtung eines Stützelements gemäß einem zweiten Ausführungsbeispiel des erfindungsgemäßen Querträgers;
- Fig. 13: eine perspektivische Ansicht in Fahrtrichtung ähnlich Fig. 12 des zweiten Ausführungsbeispiels des erfindungsgemäßen Querträgers mit entferntem fahrzeugabgewandten Wandelement;
- Fig. 14: eine perspektivische Ansicht in Fahrtrichtung ähnlich Fig. 2 gemäß einem dritten Ausführungsbeispiels eines erfindungsgemäßen Querträgers;
- Fig. 15: eine Draufsicht in Fahrtrichtung auf das dritte Ausführungsbeispiel des erfindungsgemäßen Querträgers;
- Fig. 16: eine perspektivische Darstellung des dritten Ausführungsbeispiels des erfindungsgemäßen Querträgers versehen mit einem Anhängeelement in Arbeitsstellung;
- Fig. 17: eine perspektivische Darstellung ähnlich Fig. 2 eines vierten Ausführungsbeispiels eines erfindungsgemäßen Querträgers;
- Fig. 18: eine Draufsicht in Fahrtrichtung auf das vierte Ausführungsbeispiel des erfindungsgemäßen Querträgers ähnlich Fig. 2;
- Fig. 19: eine Draufsicht auf eine fahrbahnzugewandte Seite des vierten Ausführungsbeispiels des erfindungsgemäßen Querträgers ähnlich Fig. 7;
- Fig. 20: eine Draufsicht auf eine Fahrbahnabgewandte Seite des vierten Ausführungsbeispiels des erfindungsgemäßen Querträgers ähnlich Fig. 4;
- Fig. 21: eine perspektivische Darstellung eines linken Stützelements des erfindungsgemäßen Querträgers gemäß dem vierten Ausführungsbeispiel;
- Fig. 22: eine Draufsicht auf eine fahrzeugzugewandte Seite ähnlich Fig. 7 des vierten Ausführungsbeispiels des erfindungsgemäßen Querträgers, versehen mit einem schwenkbaren Anhängeelement in Arbeitsstellung;
- Fig. 23: eine perspektivische Darstellung ähnlich Fig. 2 eines fünften Ausführungsbeispiels eines erfindungsgemäßen Querträgers mit einem schwenkbaren Anhängeelement;
- Fig. 24: eine Darstellung ähnlich Fig. 9 des fünften Ausführungsbeispiels eines erfindungsgemäßen Querträgers mit dem schwenkbaren Anhängeelement;
- Fig. 25: eine perspektivische Darstellung ähnlich Fig. 23 eines sechsten Ausführungsbeispiels des erfindungsgemäßen Querträgers versehen mit einem Anhängeelement in Arbeitsstellung und
- Fig. 26: einen Schnitt längs Linie 26-26 in Fig. 25.

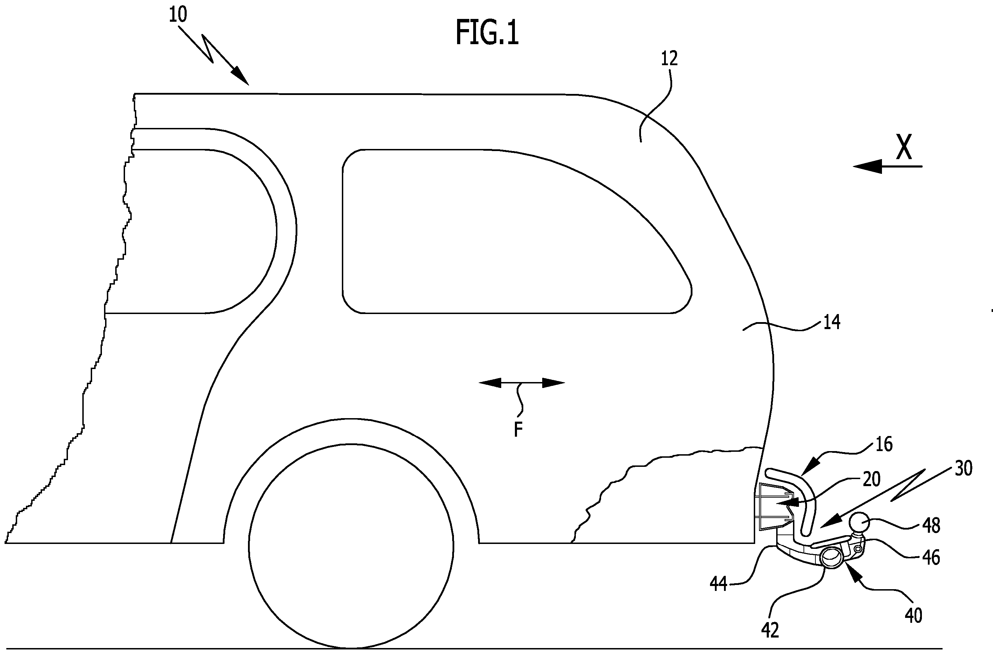

Die Erfindung dient zur Anwendung an einem Kraftfahrzeug 10, welches eine Fahrzeugkarosserie 12 aufweist, die an einem Fahrzeugheck 14 eine als Ganzes mit 16 bezeichnete Stoßfängereinheit trägt, wie in Fig. 1 dargestellt.

Verdeckt durch die Stoßfängereinheit 16 ist an dem Fahrzeugheck 14 ein als Ganzes mit 20 bezeichneter aufprallaufnehmender Querträger angeordnet, welcher Teil einer als Ganzes mit 30 bezeichneten Anhängekupplung sein kann oder zu einer als Ganzes mit 30 bezeichneten Anhängekupplung erweitert werden kann, wenn zusätzlich an dem aufprallaufnehmenden Querträger 20 ein Anhängeelement 40, insbesondere ausgebildet als Kugelhals 42, vorgesehen ist, welches sich von einem ersten Ende 44, das mit dem aufprallaufnehmenden Querträger 20 verbunden ist, bis zu einem zweiten Ende 46 erstreckt, das ein Ankuppelelement 48, beispielsweise ausgebildet als Kupplungskugel, trägt.

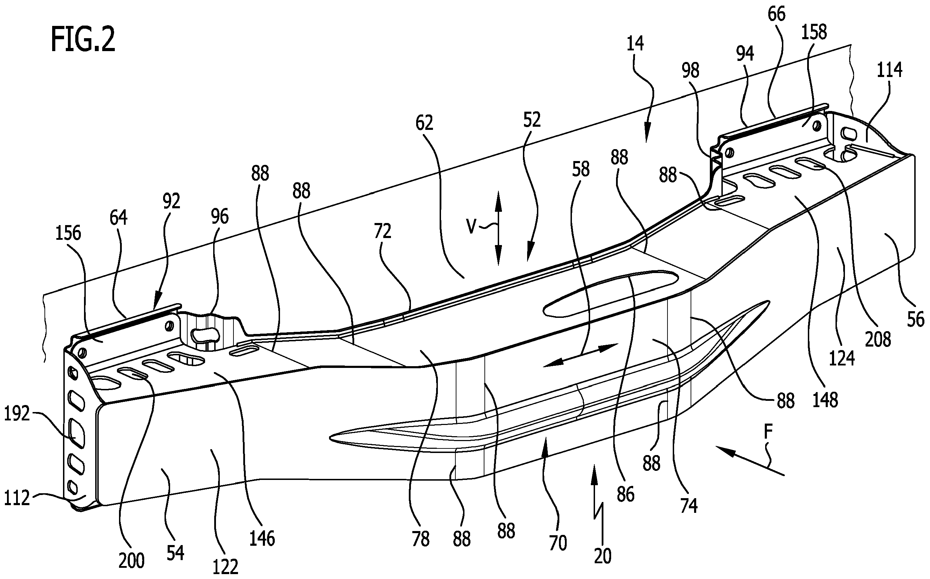

Wie in Fig. 2 dargestellt, umfasst der aufprallaufnehmende Querträger 20 eine Zentraleinheit 52, welche sich in einer ungefähr parallel zur Stoßfängereinheit 16, insbesondere quer zu einer vertikalen Fahrzeuglängsmittelebene FL verlaufenden Querrichtung 58, erstreckt, und mit beiderseits der Zentraleinheit 52 angeordneten Stützelementen 54, 56 versehen ist.

Die Stützelemente 54 und 56 stützen sich dabei auf Stützbereichen 64, 66 des Fahrzeughecks 14 ab, wobei ein zwischen den Stützbereichen 64, 66 liegender mittiger Abschnitt 62 des Fahrzeughecks 14 nicht für die Aufnahme von Kräften im Crashfall vorgesehen und geeignet ist, so dass die gesamte Krafteinleitung im Crashfall über die Stützbereiche 64 und 66 erfolgt.

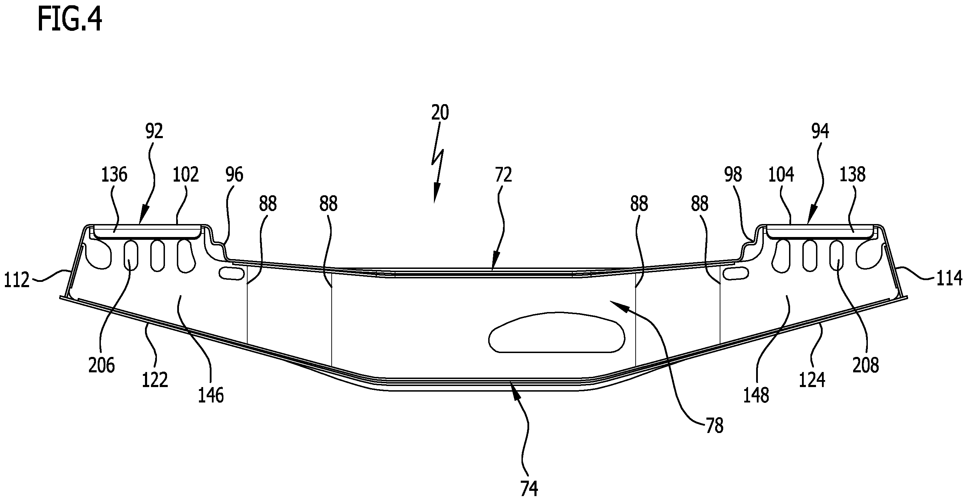

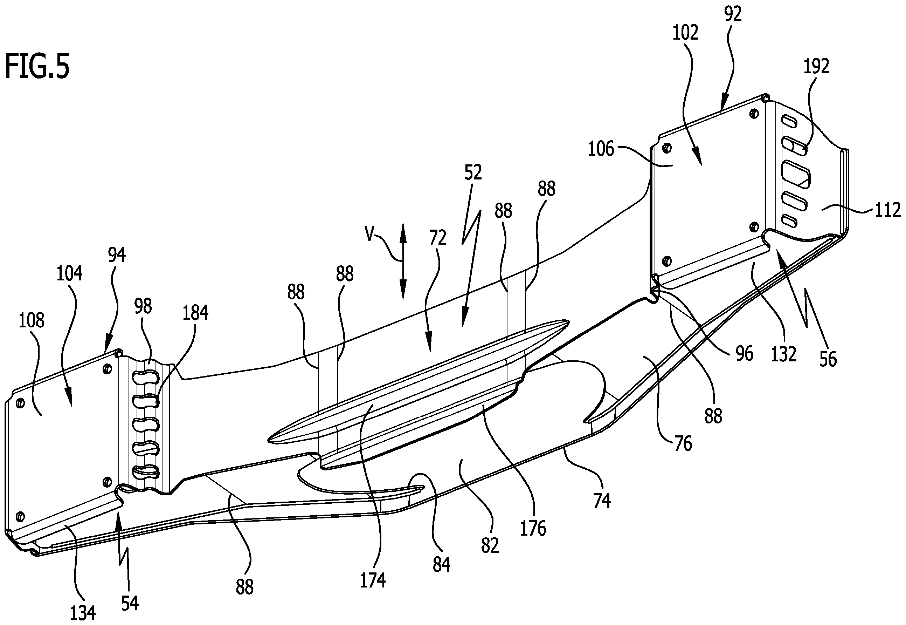

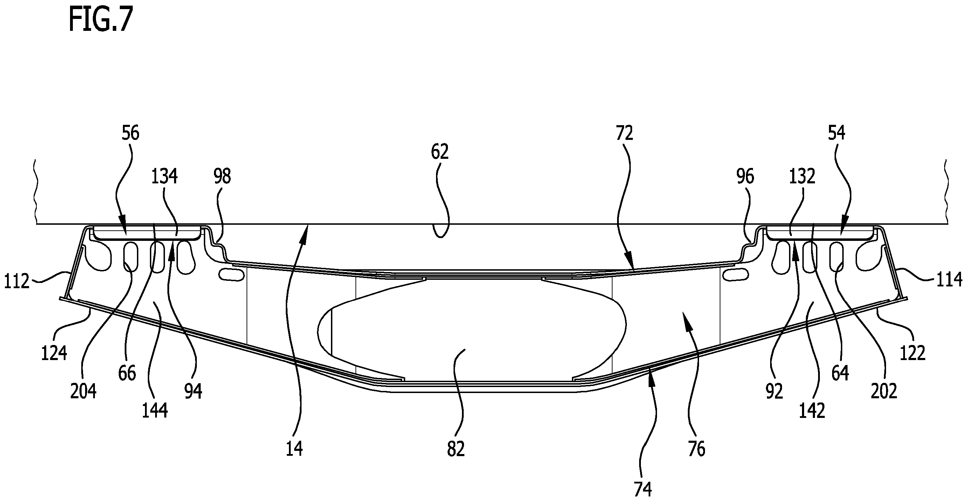

Wie in den Fig. 2 bis 7 dargestellt, weist die Zentraleinheit 52 eine kastenförmige Struktur 70 auf, die aus einem fahrzeugzugewandten Wandelement 72, einem fahrzeugabgewandten Wandelement 74, einem fahrbahnzugewandten Wandelement 76 und einem fahrbahnabgewandten Wandelement 78 gebildet ist, wobei die Wandelemente 72, 74, 76, 78, wie in den Fig. 5 und 7 dargestellt, einen Innenraum 82 der kastenförmigen Struktur 70 umschließen.

Die kastenförmige Struktur 70 ist vorzugsweise so ausgerichtet, dass das fahrzeugzugewandte Wandelement 72 zumindest im Bereich der Zentraleinheit 52 im Abstand und näherungsweise parallel zum Fahrzeugheck 14 verläuft und insbesondere näherungsweise, d.h. in einem Winkel von ± maximal 30° parallel zu einer vertikalen V verläuft.

In gleicher Weise verläuft auch das fahrzeugabgewandte Wandelement 74 ebenfalls näherungsweise, d.h. in einem Winkel von maximal ± 30°, parallel zur Vertikalen V, allerdings im Abstand zu dem fahrzeugzugewandten Wandelement 72.

Das fahrbahnzugewandte Wandelement 76 und das fahrbahnabgewandte Wandelement 78 verlaufen quer zum fahrzeugzugewandten Wandelement 72 und zum fahrzeugabgewandten Wandelement 74 und erstrecken sich zwischen diesen und im Abstand voneinander, wobei das fahrbahnzugewandte Wandelement 76 und das fahrbahnabgewandte Wandelement 78 ungefähr parallel zur Fahrtrichtung, d.h. in einem Winkel von ± maximal 30° zur Fahrtrichtung, verlaufen und dabei das fahrzeugzugewandte Wandelement 72 und das fahrzeugabgewandte Wandelement 74 relativ zueinander abstützen.

Ferner weist beispielsweise das fahrbahnzugewandte Wandelement 76 eine Zugangsöffnung 84 zu dem Innenraum 82 auf und das fahrbahnabgewandte Wandelement 78 ist vorzugsweise ebenfalls mit einer Öffnung 86 versehen, welche von dem Innenraum 82 der kastenförmigen Struktur ausgehend zugänglich ist.

Eine zusätzliche Versteifung der Wandelemente 72, 74, 76, 78 wird dadurch erreicht, dass diese mit ungefähr parallel zur vertikalen Längsmittelebene FC verlaufenden Biegelinien 88 versehen sind.

Zur Ausbildung der Struktur der Stützelemente 54, 56, ist, wie in den Fig. 5 bis 7 dargestellt, das fahrzeugzugewandte Wandelement 72 mit einstückig an dieses angeformten Ausläufern 92, 94 versehen, die sich ausgehend von dem fahrzeugzugewandten Wandelement 72 in Richtung des Fahrzeughecks 14 erstreckende, vorzugsweise zweistufig ausgebildete innere Umbiegungen 96, 98 aufweisen, an welche sich Stützplatten 102, 104 der Ausläufer 92, 94 anschließen, welche Abstützflächen 106, 108 bilden, die parallel zu den im Fahrzeugheck 14 vorgesehenen Stützbereichen 64, 66 verlaufen, um sich an diesen flächenhaft abzustützen.

Zur Stabilisierung der Stützplatten 102 und 104 sind die Ausläufer 92, 94 an ihren den inneren Umbiegungen 96, 98, gegenüberliegenden äußeren Enden noch mit von den Stützflächen 106, 108 weg in Richtung des fahrzeugabgewandten Wandelements 74 verlaufenden äußeren Umbiegungen 112 und 114 versehen, die wiederum fest mit sich in die Stützelemente 54, 56 hineinerstreckenden einstückigen Ausläufern 122, 124 des fahrzeugabgewandten Wandelements 74 verbunden sind.

Diese Verbindung der Ausläufer 92 und 94 des fahrzeugzugewandten Wandelements 72 mit den Ausläufern 122 und 124 des fahrzeugzugewandten Wandelements 72 bildet somit einen Teil der Struktur der Stützelemente 54, 56.

Zur weiteren Stabilisierung der Stützplatten 102, 104 sind diese mit sich zwischen den inneren Umbiegungen 96 und 98 und den entsprechenden äußeren Umbiegungen 112 und 114 erstreckenden, vorzugsweise ungefähr parallel zur Querrichtung 58, das heißt in einem Winkel von maximal ± 30°, verlaufenden unteren Umbiegungen 132 und 134, sowie oberen Umbiegungen 136 und 138 versehen, so dass die Stützplatten 102 und 104 insgesamt durch die Umbiegungen 96 und 98 bzw. 112 und 114, die sich näherungsweise parallel zur vertikalen Richtung V, das heißt in einem Winkel von maximal ± 30°, erstrecken, sowie durch die sich quer zur vertikalen Richtung V erstreckenden Umbiegungen 132 und 134 bzw. 136 und 138 versteift und somit insgesamt formstabil und somit in der Lage sind, die auf den Querträger 20 einwirkenden Kräfte flächenhaft auf die Stützbereiche 64 und 66 des Fahrzeughecks 14 zu übertragen.

Das fahrzeugzugewandte Wandelement 72 und das fahrzeugabgewandte Wandelement 74 erfahren zusätzlich eine Versteifung relativ zueinander durch das fahrbahnzugewandte Wandelement 76 und das fahrbahnabgewandte Wandelement 78, die sich zwischen diesen näherungsweise parallel, das heißt in einem Winkel von maximal ± 30°, zu einer Fahrtrichtung F erstrecken und außerdem einstückige Ausläufer 142 und 144 bzw. 146 und 148 aufweisen, die sich ausgehend von den Ausläufern 122 und 124 bis zu den Ausläufern 92, 94, insbesondere deren Stützplatten 102 und 104, erstrecken und auf den Stützplatten 102 und 104, und zwar auf den Stützflächen 106 und 108 gegenüberliegenden Seiten, mit umgebogenen, parallel zu den Stützplatten 102 und 104 verlaufenden, Stützflanschen 152, 154 bzw. 156, 158 aufliegen.

Vorzugweise sind die Stützflansche 152, 154 bzw. 156, 158 so ausgebildet, dass dieselben Montagelemente 162 bzw. 164, beispielsweise Schrauben, die zur Montage der Stützplatten 102 und 104 an den Stützbereichen 64, 66 dienen, auch die Stützflansche 152, 154 bzw. 156, 158 durchsetzen, so dass mit diesen Montageelementen 162, 164 bei der Montage des Querträgers 20 an dem Fahrzeugheck 14 sowohl eine Verbindung der Stützflansche 152, 154 bzw. 156, 158 mit den Stützplatten 102, 104 und gleichzeitig aber auch mit den Stützbereichen 64, 66 des Fahrzeughecks 14 erfolgt.

Somit weisen die Stützelemente 54, 56 insgesamt eine durch die Ausläufer 102, 104 des fahrzeugzugewandten Wandelements 72, die Ausläufer 122 und 124 des fahrzeugabgewandten Wandelements 74 sowie die Ausläufer 142 und 144 des fahrbahnzugewandten Wandelements 76 sowie die Ausläufer 146 und 148 des fahrbahnabgewandten Wandelements 78 insgesamt eine ausreichend steife Struktur auf, um insgesamt auf den Querträger 20, beispielsweise in einem Crashfall, einwirkende Kräfte auf das Fahrzeugheck 14, insbesondere dessen Stützbereiche 64, 66, zu übertragen.

Dabei kann im Crashfall sowohl im Bereich der Zentraleinheit 52 als auch im Bereich der Stützelemente 54 und 56, abhängig von dem Crashaufprall, eine Deformation zumindest des fahrzeugabgewandten Wandelements 74 mitsamt seinen seitlichen Ausläufern 122 und 124 sowie auch des fahrbahnzugewandten Wandelements 76 als auch des fahrbahnabgewandten Wandelements 78 im Bereich der Zentraleinheit 52 sowie auch der Ausläufer 142, 144 bzw. 146, 148 erfolgen, um zumindest einen Teil der einwirkenden Aufprallenergie durch die Deformation aufzunehmen.

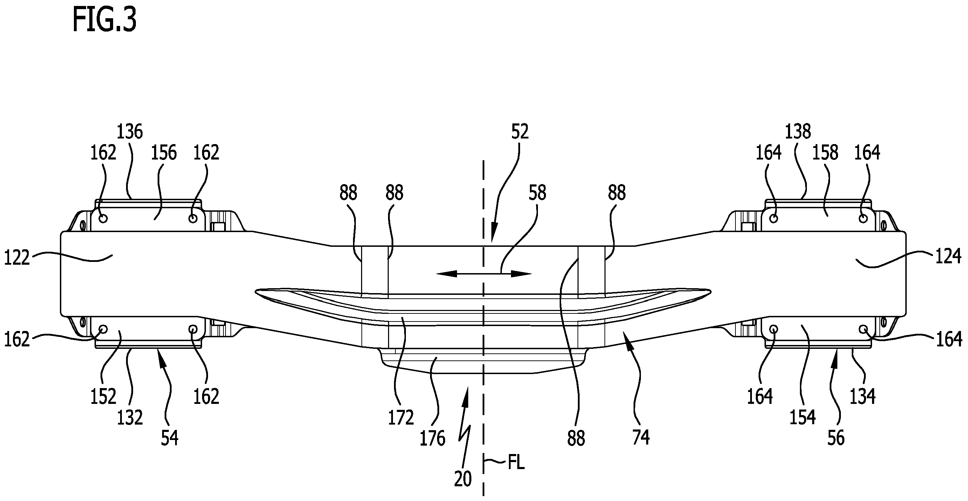

Wie in Fig. 2 und 3 dargestellt, ist zur Versteifung des fahrzeugabgewandten Wandelements 74 dieses mit einer Sicke 172 versehen, die sich zwischen den Ausläufern 122 und 124 im Wesentlichen über die Ausdehnung der Zentraleinheit 52 in der Querrichtung 58 erstreckt und insbesondere in Richtung vom Innenraum 82 der Zentraleinheit 52 nach außen gewölbt ist.

Die Sicke 172 ist dabei vorzugsweise in dem fahrzeugabgewandten Wandelement 74 nahe des fahrbahnzugewandten Wandelements 76 angeordnet, um die durch die Zugangsöffnung 84 im fahrbahnzugewandten Wandelement 76 geringere Versteifungswirkung des fahrbahnabgewandten Wandelements 74 durch das fahrbahnzugewandte Wandelement 76 auszugleichen und damit dem fahrzeugabgewandten Wandelement 74 eine ausreichende Steifigkeit zu verleihen.

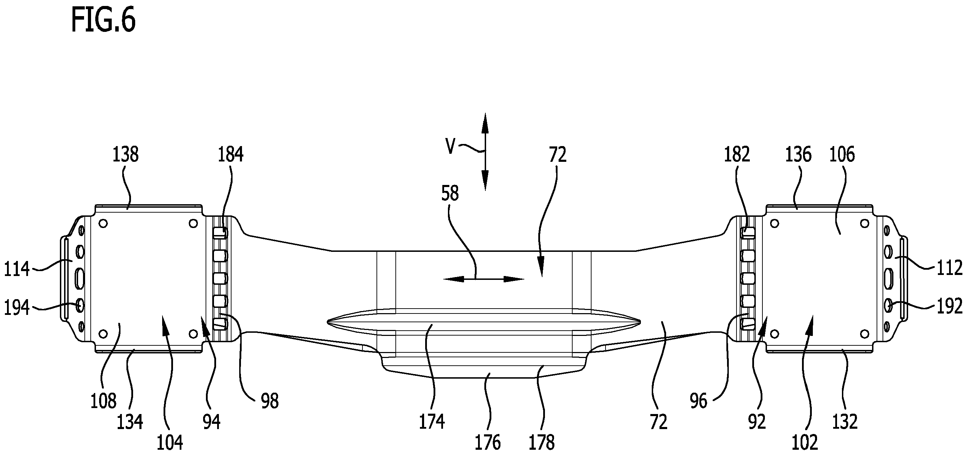

Darüber hinaus ist auch das fahrzeugzugewandte Wandelement 72, wie in den Fig. 5 und 6 dargestellt, mit einer Sicke 174 versehen, die in Richtung des Fahrzeughecks 14 ausgewölbt ist und ebenfalls dem fahrzeugzugewandten Wandelement 72 eine erhöhte Steifigkeit verleiht.

Dabei erstreckt sich die Sicke 174 ebenfalls ungefähr in der Querrichtung 58 im Bereich der Zentraleinheit 52 zwischen deren Ausläufer 92 und 94.

Ferner ist das fahrzeugzugewandte Wandelement 72 im Bereich seiner fahrbahnzugewandten Unterseite mit einem über das fahrbahnzugewandte Wandelement 76 hinausreichenden Überstand 176 versehen, welcher ebenfalls entweder Umbiegungen 178 oder Sicken 178 aufweist, um ebenfalls dem fahrzeugzugewandten Wandelement 72 im Bereich der Zugangsöffnung 84 eine verstärkte Steifigkeit zu verleihen.

Um im Fall von variierenden Belastungen des aufprallaufnehmenden Querträgers 20 Materialermüdungen oder Brüche im Bereich der die Stützplatten 102 und 104 bildenden Ausläufer 92, 94 des fahrzeugzugewandten Wandelements 72 zu vermeiden, sind in den Ausläufern 92 und 94 die Umbiegungen 96 und 98, wie in den Fig. 5 und 6 dargestellt, mit Durchbrüchen 182 und 184 versehen, die den Umbiegungen eine begrenzte Bewegungselastizität verleihen, um beim Übertragen der Kräfte von den Stützplatten 102 und 104 auf den Querträger 20, insbesondere dessen Zentraleinheit 52 Belastungsbrüche zu vermeiden.

Desgleichen sind auch in den Umbiegungen 112 und 114, wie beispielsweise in den Fig. 2, 5 und 6 dargestellt, mit Durchbrüchen 192 und 194 vorgesehen, die ebenfalls den Umbiegungen 112 und 114 eine begrenzte Biegeelastizität zur Übertragung von Kräften von den Stützplatten 102 und 104 auf den Querträger 20 verleihen und Belastungsbrüche zu verhindern.

Um außerdem auch in den an die Stützplatten 102 und 104 angrenzenden Ausläufern 142 und 144 des fahrbahnzugewandten Wandelements 76 eine Biegeelastizität zu verleihen, sind diese ebenfalls mit Durchbrüchen 202 und 204 versehen, wie beispielsweise in Fig. 7 dargestellt.

Darüber hinaus sind auch in den Ausläufern 146 und 148 des fahrbahnabgewandten Wandelements 78 Durchbrüche 206 und 208 im Anschluss an die Stützplatten 102 und 104 vorgesehen, um ebenfalls eine begrenzte Biegeelastizität zu erreichen.

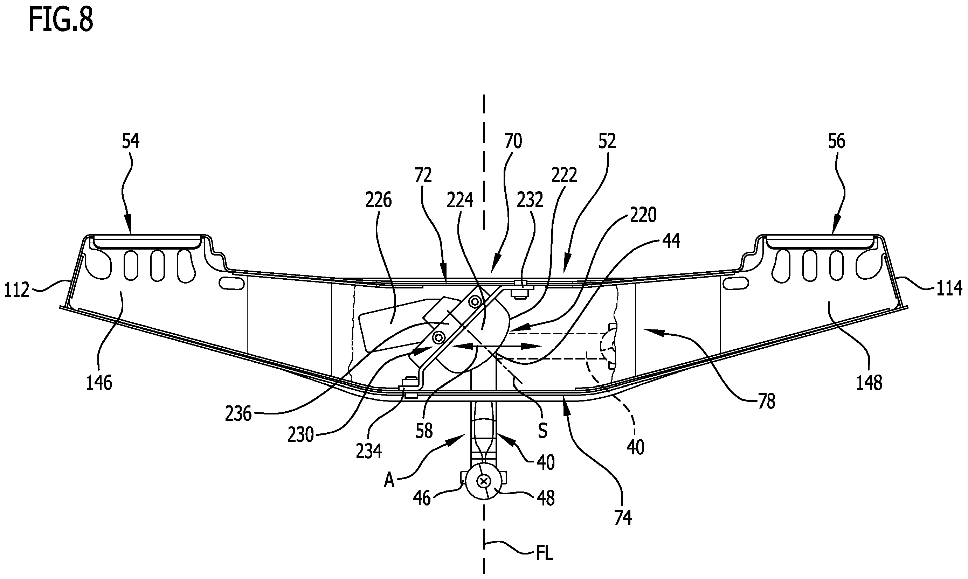

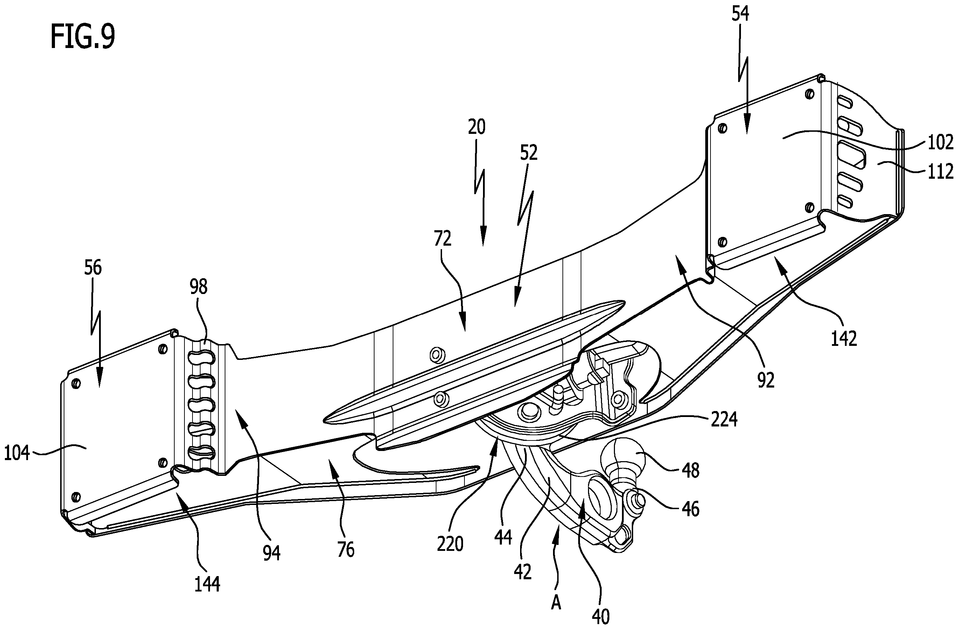

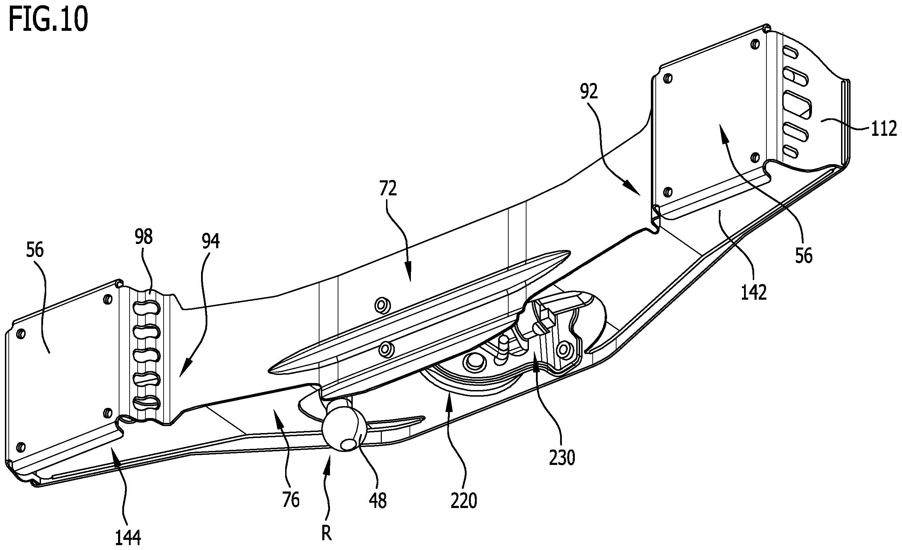

Um den aufprallabsorbierenden Querträger 20 zu der Anhängekupplung 30 zu erweitern, welche das Anhängeelement 40 umfasst, ist, wie in Fig. 8 dargestellt, das Anhängeelement 40 mit einer als Ganzes mit 220 bezeichneten Aufnahmeeinheit für das Anhängeelement 40 versehen, welche bei dem in den Fig. 8 bis 11 dargestellten Ausführungsbeispiel eine Schwenklagereinheit 222 umfasst, die einen Schwenklagerkörper 224 aufweist, mit welchem das Anhängeelement 40 mit dem ersten Ende 44 verbunden ist, so dass durch Drehung des Schwenklagerkörpers 224 um die schräg zur vertikalen Fahrzeuglängsmittelebe FL des Kraftfahrzeugs 10 verlaufende Schwenkachse S das Anhängeelement 40 von einer in den Fig. 8 und 9 dargestellten Arbeitsstellung A, in welcher sich das Anhängeelement 40 näherungsweise in der vertikalen Fahrzeuglängsmittelebene FL, vorzugsweise symmetrisch zu dieser, erstreckt, in eine Ruhestellung R verschwenkbar ist, in welcher beispielsweise das Anhängeelement 40, wie in Fig. 8 gestrichelt und in Fig. 10 durchgezogen dargestellt, in dem Innenraum 82 der Zentraleinheit 52 liegt, und zwar so,, dass sich das Anhängeelement 40, wie in Fig. 8 gestrichelt angedeutet, ausgehend vom Schwenklagerkörper 224 näherungsweise, das heißt mit einem Winkel von maximal plus/minus 30° parallel zur Querrichtung 58 erstreckt, wobei, wie in Fig. 10 dargestellt, das Ankuppelelement 48 in Richtung der Fahrbahn weist und beispielsweise aus dem Innenraum 82 durch die Zugangsöffnung 84 hindurch in Richtung der Fahrbahn übersteht, während das Anhängeelement 40 innerhalb des Innenraums 82 liegt und sich gegebenenfalls in die Öffnung 86 hineinerstreckt.

Die Schwenklagereinheit 222 ist dabei beispielsweise noch durch einen Antriebsmotor 226 antreibbar.

Zur Montage der Schwenklagereinheit 222 in dem Innenraum 82 der Zentraleinheit 52, insbesondere der kastenförmigen Struktur 70, ist diese an einer als Ganzes mit 230 bezeichneten Montagebasis gehalten, wobei die Schwenklagereinheit 222 die Montagebasis 230, beispielsweise ausgebildet als Flanscheinheit, durchsetzt, so dass beispielsweise auf einer Seite der Montagebasis 230 der Antriebsmotor 226 angeordnet ist und auf der gegenüberliegenden Seite der Schwenklagerkörper 224 liegt.

Insbesondere ist bei dem erfindungsgemäßen Querträger 20 die gesamte Aufnahmeeinheit 220 mitsamt dem montierten Anhängeelement 40 und der Montagebasis 230 durch die in Fig. 5 dargestellte Zugangsöffnung 84 in der fahrbahnzugewandten Wand 76 in den Innenraum 82 der kastenförmigen Struktur 70 der Zentraleinheit 52 einsetzbar, wobei die Montagebasis 230 einen Montageflansch 232 zur Verbindung mit dem fahrzeugzugewandten Wandelement 72 aufweist sowie einen mit dem fahrzeugabgewandten Wandelement 74 verbindbaren Montageflansch 234 aufweist.

Zusätzlich ist die Montagebasis 230 noch mit einem Montageflansch 236 versehen, mit welchem eine Verbindung zum fahrbahnabgewandten Wandelement 78 erfolgt.

Somit ist mittels der Montagebasis 230 eine stabile Verbindung zwischen der Schwenklagereinheit 222 und der kastenförmigen Struktur 70 der Zentraleinheit 52 herstellbar.

Die Einbaulage der Montagebasis 230 in der kastenförmigen Struktur 70 der Zentraleinheit 52 ist dabei so gewählt, wie in Fig. 8 und 9 dargestellt, das Anhängeelement 40 dann, wenn es in der Arbeitsstellung A steht, sich ausgehend von dem Schwenklagerkörper 224 mit dem ersten Ende 44 nach unten durch die Öffnung 84 des fahrbahnzugewandten Wandelements 76 hindurcherstreckt und sich unter dem fahrbahnzugewandten Wandelement 76 und dem fahrzeugabgewandten Wandelement 74 entgegengesetzt zur Fahrtrichtung F erstreckt, so dass das Ankuppelelement 48 in der Arbeitsstellung A entgegengesetzt zur Fahrtrichtung F hinter dem fahrzeugabgewandten Wandelement 74 liegt, wie in den Fig. 8 und 9 dargestellt.

Erfolgt jedoch ein Verschwenken des Anhängeelements 40 von der Arbeitsstellung A in die Ruhestellung R, so bewegt sich das Anhängeelement 40 mitsamt dem Ankuppelelement 48 unter dem fahrzeugabgewandten Wandelement 74 hindurch und von unten durch die Öffnung 84 im fahrbahnzugewandten Wandelement 76 hindurch in den Innenraum 82 der kastenförmigen Struktur 70 der Zentraleinheit 52 hinein, wobei sich in diesem Fall das Anhängeelement 40 ausgehend von dem Schwenklagerkörper 224 zwischen dem fahrzeugabgewandten Wandelement 74 und dem fahrzeugzugewandten Wandelement 72 erstreckt und nahe an dem fahrbahnabgewandten Wandelement 78 liegt.

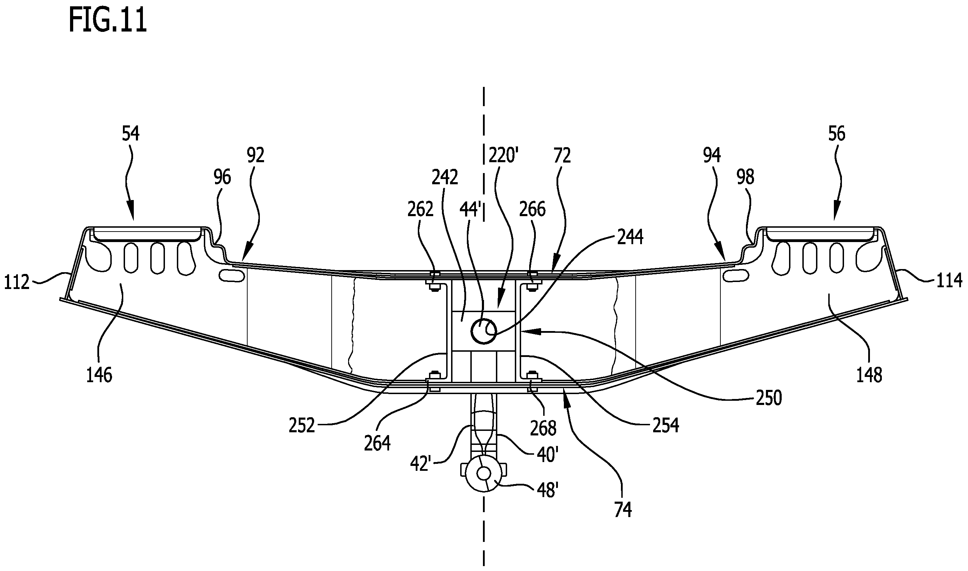

Alternativ zur Aufnahmeeinheit 220 für ein verschwenkbares Anhängeelement 40 sieht ein weiteres Ausführungsbeispiel, dargestellt in Fig. 11, eine Aufnahmeeinheit 220' vor, welche einen Lagerblock 242 aufweist, der mit einer Aufnahme 244 versehen ist, in welche ein erstes Ende 44' des Anhängeelements 40' von der Fahrbahnseite her einsteckbar ist und durch eine nicht dargestellte Verriegelungsvorrichtung in dem Lagerblock 242 verriegelbar ist, so dass das gesamte Anhängeelement 40' mit dem ersten Ende 44' und dem Kugelhals 42' sowie dem Ankuppelelement 48' aus dem Lagerblock 242 durch Entfernen des ersten Endes 44' nach unten in Richtung der Fahrbahn entnehmbar ist und separat im Kraftfahrzeug 10 gelagert werden kann.

Der Lagerblock 242 ist dabei seinerseits noch durch eine Montagebasis 250 an dem fahrzeugzugewandten Wandelement 72 und dem fahrzeugabgewandten Wandelement 74 montierbar, beispielsweise dadurch, dass die Montagebasis 250 zwei den Lagerblock 242 zwischen sich aufnehmende Flanschplatten 252 und 254 aufweist, die fest mit dem Lagerblock 242 verbunden sind und ihrerseits über Montageflansche 262, 264 bzw. 266, 268 jeweils mit dem fahrzeugzugewandten Wandelement 72 und dem fahrzeugabgewandten Wandelement 74 verbunden sind, um die gesamte Aufnahmeeinheit 220', ebenfalls bei Bedarf in dem Innenraum 82 der kastenförmigen Struktur 70 der Zentraleinheit 52, montieren zu können und somit den aufprallaufnehmenden Querträger 20 als Teil der Anhängekupplung 30 zu nutzen.

Da bei Einsatz des Querträgers 20 als Teil der Anhängekupplung 30 die von dem Anhängeelement 40 auf das Fahrzeugheck 14, insbesondere die Stützbereiche 64 und 66 desselben, einwirkenden Kräfte von der Zentraleinheit 52 auf die Stützelemente 54 und 56 und somit letztlich auf die Stützplatten 102 und 104 zu übertragen sind und diese Kräfte bei Anhängerbetrieb variieren, ist die durch die Durchbrüche 182 und 184 in den Umbiegungen 96 und 98, die Durchbrüche 192 und 194 in den Umbiegungen 112 und 114 sowie die Durchbrüche 202 und 204 in den Ausläufern 142 und 144 des fahrbahnzugewandten Wandelements 76 als auch die Durchbrüche 206 und 208 in den Ausläufern 146 und 148 des fahrbahnabgewandten Wandelements 78 ermöglichte Flexibilität bei einwirkenden Kräften von Vorteil, um Ermüdungsbrüche in diesen Bereichen zu verhindern.

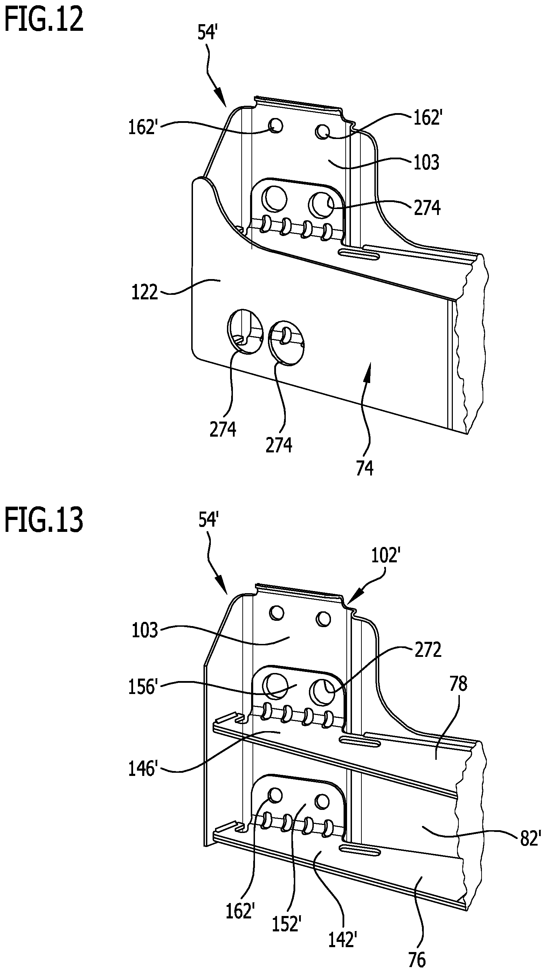

Bei einem zweiten Ausführungsbeispiel der erfindungsgemäßen Lösung, dargestellt in den Fig. 12 und 13, welches eine Variante des ersten Ausführungsbeispiels darstellt, sind die beiden Stützelemente, repräsentativ dargestellt an einem Stützelement 54', insoweit verändert ausgebildet, als die Stützplatten 102' zumindest auf einer Seite über das obere Wandelement 78 oder das untere Wandelement 76 überstehen.

In diesem Fall ist beispielsweise das untere Wandelement 76 im Bereich seines Ausläufers 142' mit einem Stützflansch 152' versehen, welcher sich an der Stützplatte 102' anliegend in Richtung des fahrbahnabgewandten Wandelements 78 erstreckt und somit in dem Innenraum 82' der kastenförmigen Struktur 70 im Bereich des Stützelements 54' liegt.

Ferner ist der Ausläufer 146' des oberen Wandelements 78 mit einem Stützflansch 156' versehen, welcher beispielsweise Durchlässe 272 aufweist, mittels welcher eine Verschweißung mit der Stützplatte 102' erfolgt.

Ein Verschrauben der Stützplatte 102' mit dem Stützbereich 64 erfolgt dabei dadurch, dass einerseits der Stützflansch 152' mitsamt der Stützplatte 102' mittels Montageelementen 162' mit dem Stützbereich 64 verbunden wird, während die Stützplatte 102' mit ihrem über das fahrbahnabgewandte Wandelement 78 überstehenden Bereich 103 mit den Montageelementen 162' ebenfalls mit dem Stützbereich 64 verbunden wird.

Das zweite Ausführungsbeispiel hat somit den Vorteil, dass damit die Lage der kastenförmigen Struktur 70, gebildet durch die Zentraleinheit 52 und die Stützelemente 54' und 56' relativ zur Lage und Ausdehnung der Stützplatte 102' variabel gestaltet werden kann.

Ferner ist zur Montage der Montageelemente 162', die den Stützflansch 152' beaufschlagen, das fahrzeugabgewandte Wandelement 74 mit Öffnungen 274 versehen, welche ein Montieren der Montageelemente 162' zur Beaufschlagung des Stützflansches 152' und der Montageplatte 102' erlauben.

Dadurch, dass sowohl bei dem ersten als auch bei dem zweiten Ausführungsbeispiel die Struktur der Stützelemente 54 und 56 durch die Ausläufer 92 und 94 des fahrzeugzugewandten Wandelements, die Ausläufer 122 und 124 des fahrzeugabgewandten Wandelements 74, die Ausläufer 142 und 144 des fahrbahnzugewandten Wandelements 76 sowie die Ausläufer 146 und 148 des fahrbahnabgewandten Elements 78 gebildet sind, wird die Herstellung des erfindungsgemäßen Querträgers aufgrund der Reduzierung von Schweißvorgängen erheblich vereinfacht und auch dessen Anfälligkeit gegen Strukturbrüche aufgrund von Belastungen verbessert.

Im Übrigen wird durch die Umbiegungen 96 und 98, 112 und 114 sowie 132 und 134 und 136 und 138 der Ausläufer 92, 94 des fahrzeugzugewandten Wandelements 72 die Steifigkeit der Stützplatten 102 und 104 verbessert, so dass sich das fahrzeugzugewandte Wandelement 72 und dessen Ausläufer 92, 94 aus Blechmaterial herstellen lassen, dessen Dicker geringer als 2,5 mm, noch besser 2 mm ist.

Darüber hinaus tragen auch noch die Stützflansche 152 und 154 des fahrbahnzugewandten Wandelements 76 und die Stützflansche 156 und 158 des fahrbahnabgewandten Wandelements 78 durch ihre flächenhafte Anlage an den Stützplatten 102 und 104 zur weiteren Versteifung der Stützplatten 102 und 104 sowie zur optimalen Krafteinleitung in die Stützplatten 102 und 104 bei.

Somit erfolgt beispielsweise lediglich noch eine Verschweißung des fahrzeugzugewandten Wandelements 72 mit dem fahrbahnzugewandten Wandelement 76 und dem fahrbahnabgewandten Wandelement 78 primär im Bereich der Zentraleinheit 52 und eine Verschweißung des fahrzeugabgewandten Wandelements 74 mit dem fahrbahnzugewandten Wandelement 76 und dem fahrbahnabgewandten Wandelement 78 sowie den den Ausläufern 122 und 124 des fahrzeugabgewandten Wandelements 74 zugewandten Umbiegungen 112 und 114 der Ausläufer 92 und 94 des fahrzeugzugewandten Wandelements 72.

Im Übrigen wird bezüglich des zweiten Ausführungsbeispiels hinsichtlich der übrigen Elemente vollinhaltlich auf die Ausführungen zum ersten Ausführungsbeispiel Bezug genommen.

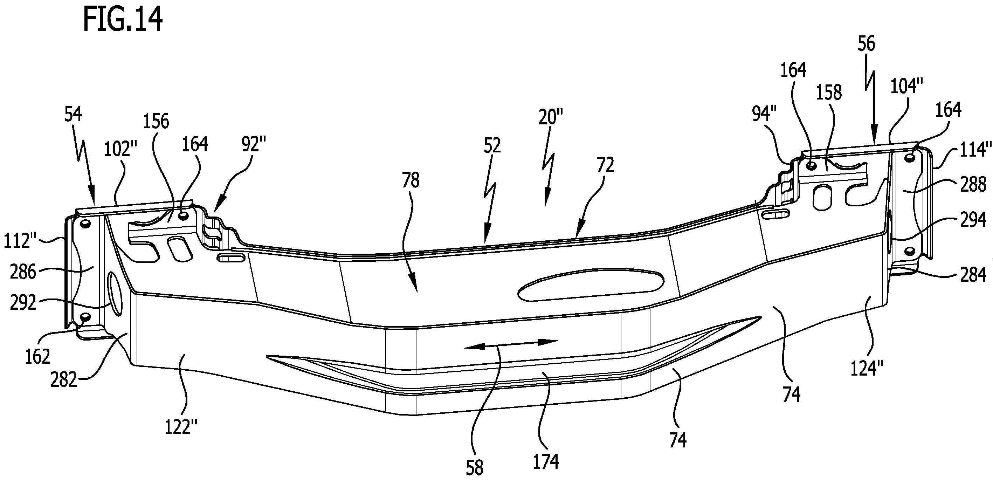

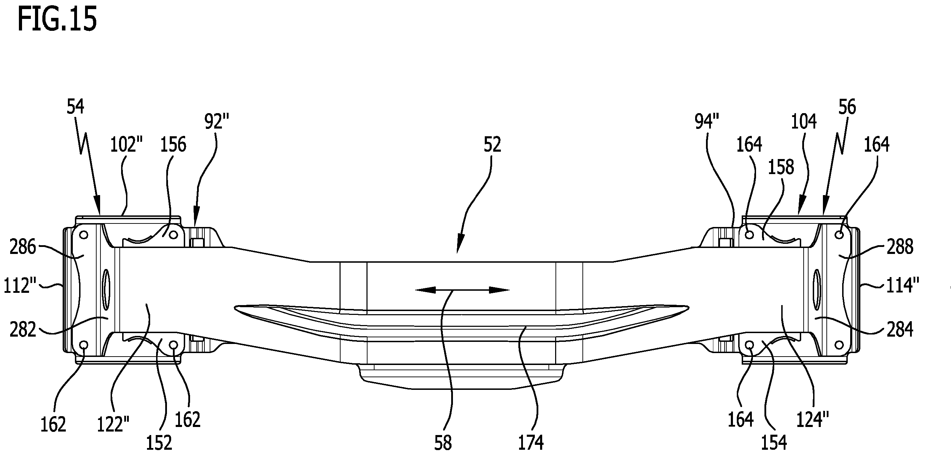

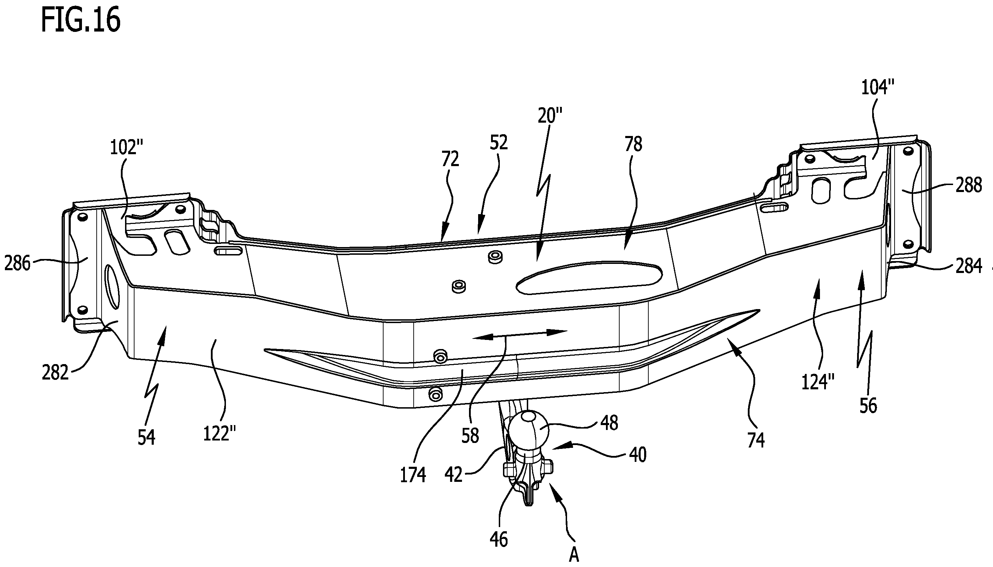

Bei einem dritten Ausführungsbeispiel, dargestellt in den Fig. 14 bis 16, sind im Gegensatz zum ersten Ausführungsbeispiel die Ausläufer 122" und 124" so ausgebildet, dass diese Umbiegungen 282 und 284 aufweisen, die sich bis zu den Stützplatten 102" und 104" erstrecken und an den Stützplatten 102" und 104" flächenhaft anliegende Stützflansche 286 und 288 aufweisen, mit denen sich die Ausläufer 122" und 124" unmittelbar auf den Stützplatten 102" und 104" abstützen.

Im Gegensatz dazu erstrecken sich die äußeren Umbiegungen 112" und 114" der Ausläufer 92" und 94" des fahrzeugzugewandten Wandelements 72 lediglich noch quer zu den Stützplatten 102" und 104", jedoch nicht mehr bis zu den Ausläufern 122" und 124" des fahrzeugabgewandten Wandelements 74 und außerdem liegen die Umbiegungen 112" und 114" in Querrichtung 58 außerhalb der Stützflansche 286 und 288 der äußeren Umbiegungen 282 und 284.

Ferner sind vorzugsweise die äußeren Umbiegungen 282 und 284 noch mit Durchbrüchen 292 und 294 versehen, welche den Umbiegungen 282 und 284 eine gewisse Flexibilität bei der Abstützung des fahrzeugabgewandten Wandelements 74 verleihen.

Im Übrigen sind bei dem dritten Ausführungsbeispiel die Stützflansche 286 und 288 mittels Montageelementen 162 und 164 mit den Stützplatten 102" und 104" und auch den Stützbereichen 64 bzw. 66 verbunden und außerdem sind auch noch die Stützflansche 152 und 154 sowie 156 und 158 jeweils beispielsweise mittels einem der Montageelemente 162 bzw. 164 mit den jeweiligen Stützplatten 102' und 104' verbunden.

Auch bei dem dritten Ausführungsbeispiel des erfindungsgemäßen Querträgers 20" besteht die Möglichkeit, diesen in gleicher Weise wie beim ersten Ausführungsbeispiel mit einem Anhängeelement 40 und einer im Innenraum 82 desselben vorgesehen Aufnahmeeinheit 220 auszustatten, in gleicher Weise wie dies im Zusammenhang mit dem ersten Ausführungsbeispiel beschrieben wurde, wobei der Querträger 20" dem Querträger gemäß dem dritten Ausführungsbeispiel entspricht, der hinsichtlich der übrigen Merkmale auch im Zusammenhang mit dem ersten Ausführungsbeispiel vollinhaltlich beschrieben wurde, so dass hierauf vollständig Bezug genommen wird.

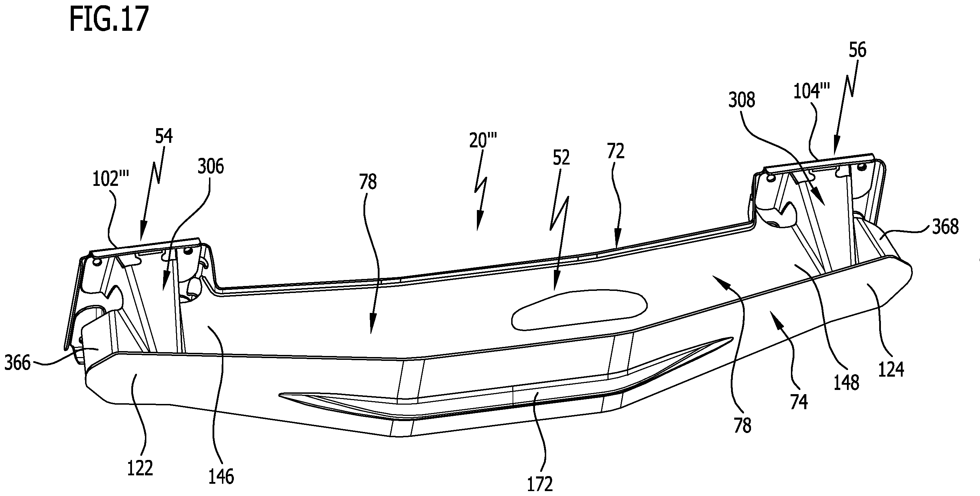

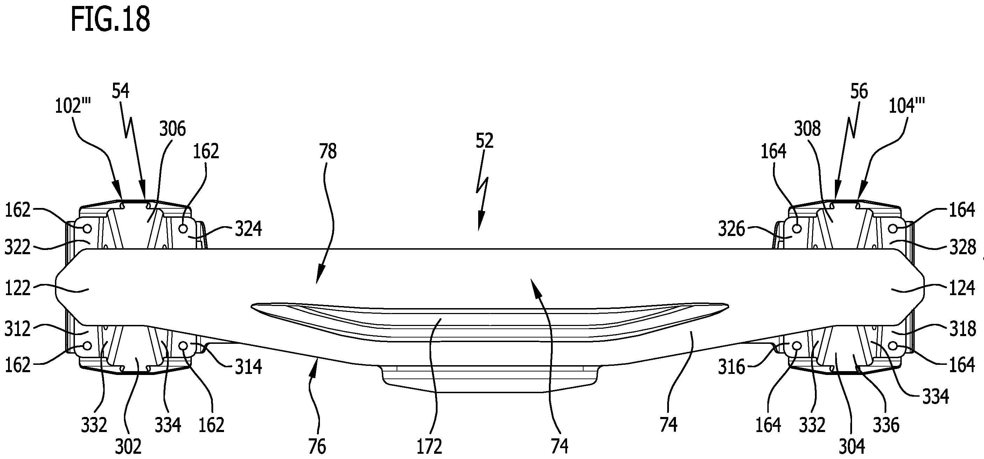

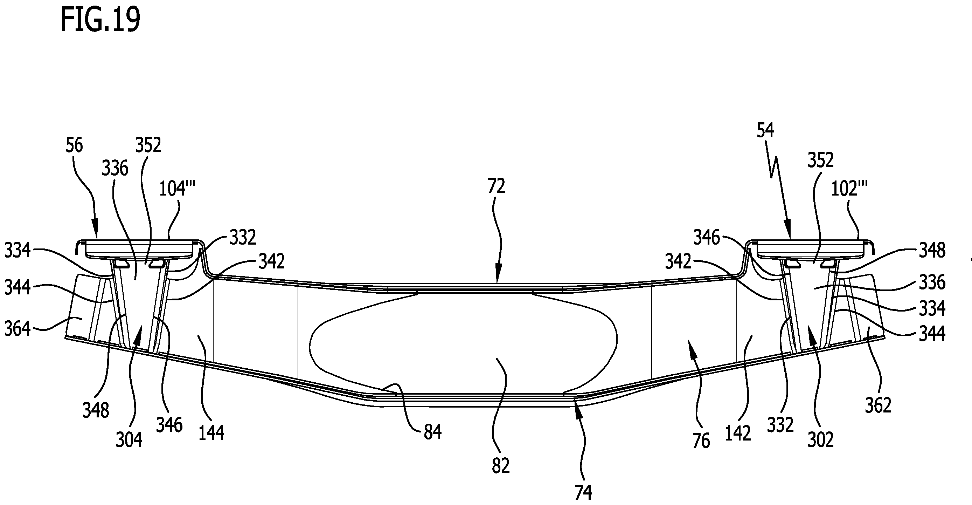

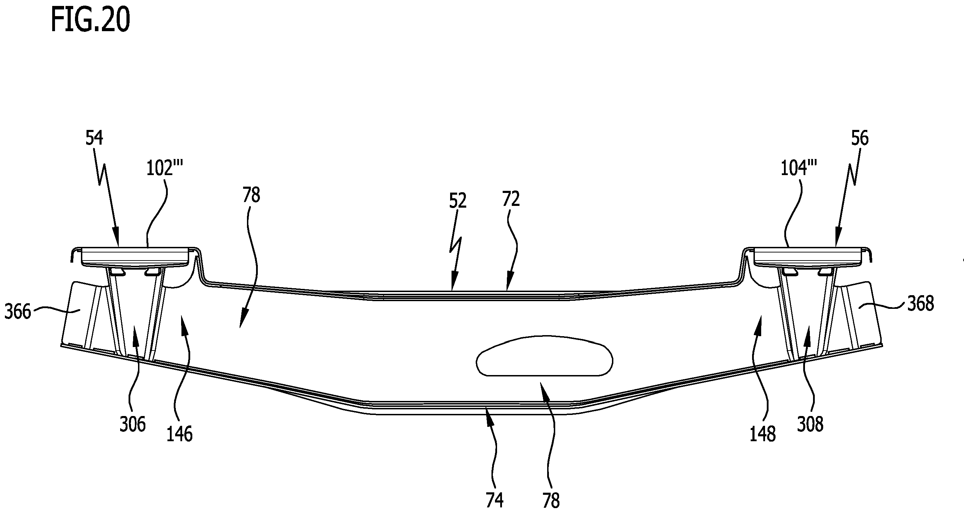

Bei einem vierten Ausführungsbeispiel, dargestellt in den Fig. 17 bis 21, sind diejenigen Elemente, die mit den voranstehenden Ausführungsbeispielen identisch sind, mit denselben Bezugszeichen versehen, so dass hinsichtlich der Beschreibung derselben auf die Ausführungen zu den voranstehenden Ausführungsbeispielen Bezug genommen wird.

Im Gegensatz zu den voranstehenden Ausführungsbeispielen sind in die Ausläufer 142 und 144 des fahrbahnzugewandten Wandelements 76 sowie in die Ausläufer 146 und 148 des fahrbahnabgewandten Wandelements 78 Abstützkörper 302 und 304 bzw. 306 und 308 angeformt, insbesondere einstückig angeformt, die sich ihrerseits mittels Flanschelementen 312 und 314 im Fall des Abstützkörpers 302, mittels Flanschelementen 316, 318 im Fall des Stützkörpers 304, mittels Flanschelementen 322 und 324 im Fall des Stützkörpers 306 und mittels Flanschelementen 326 und 328 im Fall des Stützkörpers 308 an den Stützplatten 102"' und 104"' der Stützelemente 54 bzw. 56 abstützen.

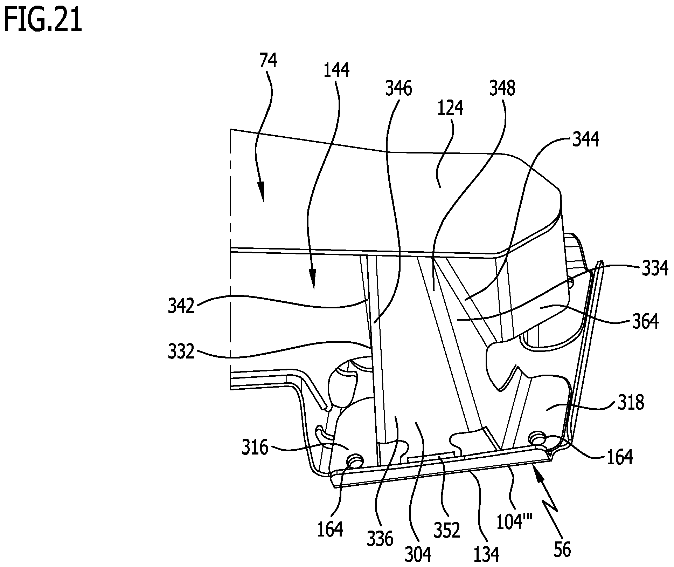

Wie insbesondere in Fig. 21 am Beispiel des Stützkörpers 304 vergrößert dargestellt, umfasst jeder der halbpyramidenförmigen Abstützkörper, in diesem Fall der Abstützkörper 304, jeweils zwei von dem jeweiligen Ausläufer 142, 144 bzw. 146, 148 ausgehende und sich über den jeweiligen Ausläufer 142, 144, 146, 148, in diesem Fall den Ausläufer 144, erhebende Seitenwände 332, 334, die in Richtung der jeweiligen Flanschelemente 312 bzw. 314, (im Fall des Abstützkörper 302) 316 bzw. 318 (im Fall des Abstützkörpers 304), 322 bzw. 324 (im Fall des Abstützkörpers 306) und 326 bzw. 328 (im Fall des Abstützkörpers 308), sich mit zunehmendem Abstand voneinander erstrecken und in die Flanschelemente 312 bzw. 314 (im Fall des Abstützkörpers 302), 316 bzw. 318 (im Fall des Abstützkörpers 304), 322 bzw. 324, (im Fall des Abstützkörpers 306) - und 326 bzw. 328 (im Fall des Abstützkörpers 308) übergehen.

Ferner sind die Seitenwände der Abstützkörper 302, 304, 306, 308 durch eine im Abstand von dem jeweiligen Ausläufer 142, 144, 146 und 148 verlaufende Verbindungswand 336 miteinander verbunden, die ebenfalls zum jeweiligen Ausläufer 142, 144, 146, 148 mit zunehmendem Abstand in Richtung der jeweiligen Stützplatte 102"', 104"'verläuft.

Somit bilden die Seitenwände 332 und 334 zusammen mit der Verbindungswand 336 einen sich über dem jeweiligen Ausläufer 142, 144, 146, 148 erhebenden halbpyramidenförmigen Abstützkörper 302, 304, 306, 308, mit welchem sich das jeweilige fahrbahnzugewandte Wandelement 76 sowie das fahrbahnabgewandte Wandelement 78 an den Stützplatten 102‴ und 104‴ abstützen.

Vorzugsweise sind die Seitenwände 332 einstückig an den jeweiligen Ausläufer 142, 144 bzw. 146, 148 durch eine Umbiegung 342 bzw. 344 angeformt und gehen dann wiederum durch eine Umbiegung 346 und 348 in die Verbindungswand 336 über, so dass der jeweilige Abstützkörper 302, 304, 306, 308 ausschließlich durch Umformen des jeweiligen Ausläufers 142, 144, im Fall des fahrbahnzugewandten Wandelements 76, und des jeweiligen Ausläufers 146 und 148, im Fall des fahrbahnabgewandten Wandelements 78, einstückig ausgeformt ist und somit für den jeweiligen Ausläufer 142, 144 bzw. 146, 148 selbst eine Versteifung darstellt und andererseits eine zusätzliche struktursteife Abstützung des jeweiligen Ausläufers 142, 144 bzw. 146, 148 relativ zu der jeweiligen Stützplatte 102‴, 104‴ bildet.

Ferner weist vorzugsweise jede Verbindungswand 336 noch einen Fortsatz 352 auf, mit welchem diese mit der entsprechenden Umbiegung 132 bzw. 134 sowie 136 bzw. 138 der jeweiligen Stützplatte 102‴, 104‴ verbunden ist, um eine weitere Versteifung zwischen dem jeweiligen halbpyramidenförmigen Abstützkörper 302, 304, 306, 308 und der Abstützplatte 102"' bzw. 104"' zu erreichen.

Die Flanschelemente 312 bis 318 sind ihrerseits wiederum mit den Stützplatten 102‴ und 104‴ und dem jeweiligen Stützbereich 64 bzw. 66 des Fahrzeughecks 14 mittels der Montageelemente 162 bzw. 164 verbunden, um eine einfache und stabile Verbindung zum jeweiligen Stützbereich 64 bzw. 66 am Fahrzeugheck herzustellen, die zusätzlich zur Versteifung des jeweiligen Stützkörpers 102‴ bzw. 104‴ beiträgt.

Darüber hinaus sind, wie in den Fig. 17 bis 21 dargestellt, die Ausläufer 142 und 144 noch mit Umbiegungen 362 bzw. 364 versehen, die auf Umbiegungen 366 und 368 der Ausläufer 146 und 148 des fahrzeugabgewandten Wandelements zulaufen, so dass die Umbiegungen 362 und 346 jeweils mit den Umbiegungen 366 und 368 endseitig verbunden sind und somit das fahrbahnzugewandte Wandelement 76 und das fahrbahnabgewandte Wandelement durch die Verbindungen im Bereich ihrer Ausläufer 362 und 366 bzw. 364 und 368 eine den Innenraum 82 umschließende Struktur bilden.

Vorzugsweise erfolgt die Verbindung zwischen den Umbiegungen 362 und 366 bzw. 364 und 368 im Rahmen einer Schweißverbindung in gleicher Weise wie die Verbindung des fahrzeugabgewandten Wandelements 74 mit dem fahrbahnzugewandten Wandelement 76 und dem fahrbahnabgewandten Wandelement 78 im Rahmen von Schweißverbindungen erfolgt.

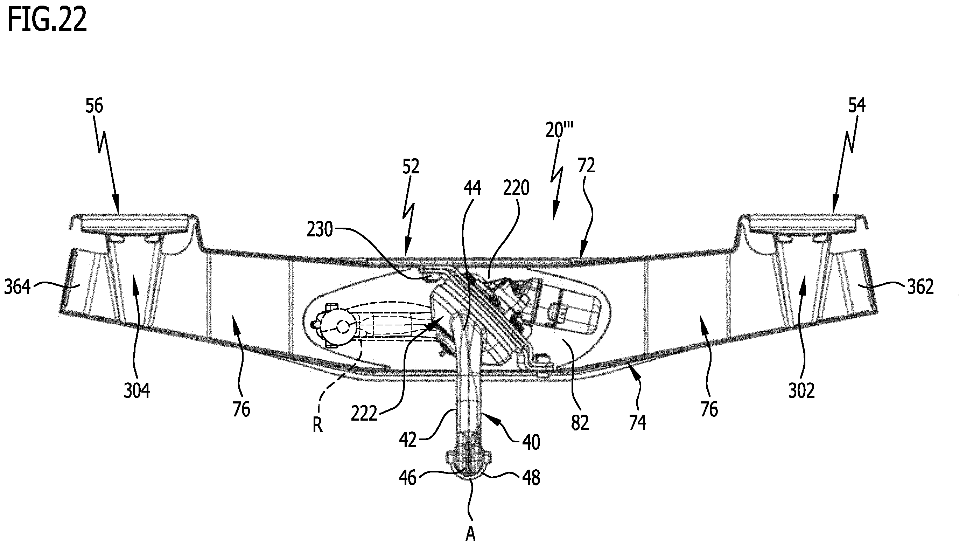

Auch bei diesem Ausführungsbeispiel besteht, wie in Fig. 22 dargestellt, die Möglichkeit, den Querträger 20‴ durch Vorsehen eines Anhängeelements 40 zu einer Anhängekupplung zu ergänzen, wobei das Anhängeelement 40 in gleicher Weise mit einer Aufnahmeeinheit 220 und einer Montagebasis 230 in gleicher Weise wie bei dem ersten Ausführungsbeispiel dargestellt, in dem Innenraum 82 montiert werden kann oder alternativ dazu auch - wie zeichnerisch nicht in Fig. 22 dargestellt - durch Vorsehen einer Montagebasis 250 in dem Innenraum montiert werden kann.

Im in Fig. 22 dargestellten Ausführungsbeispiel ist dabei das Anhängeelement 40 wie ebenfalls im Zusammenhang mit dem ersten Ausführungsbeispiel beschrieben, zwischen einer Arbeitsstellung A und einer Ruhestellung R verschwenkbar, wobei die Ruhestellung R lediglich gestrichelt dargestellt ist.

Hinsichtlich der weiteren Merkmale des vierten Ausführungsbeispiels insoweit, als diese mit den voranstehenden Ausführungsbeispielen identisch sind, sind diese mit denselben Bezugszeichen versehen, so dass auf die Ausführungen im Zusammenhang mit den voranstehenden Ausführungsbeispielen vollinhaltlich Bezug genommen wird.

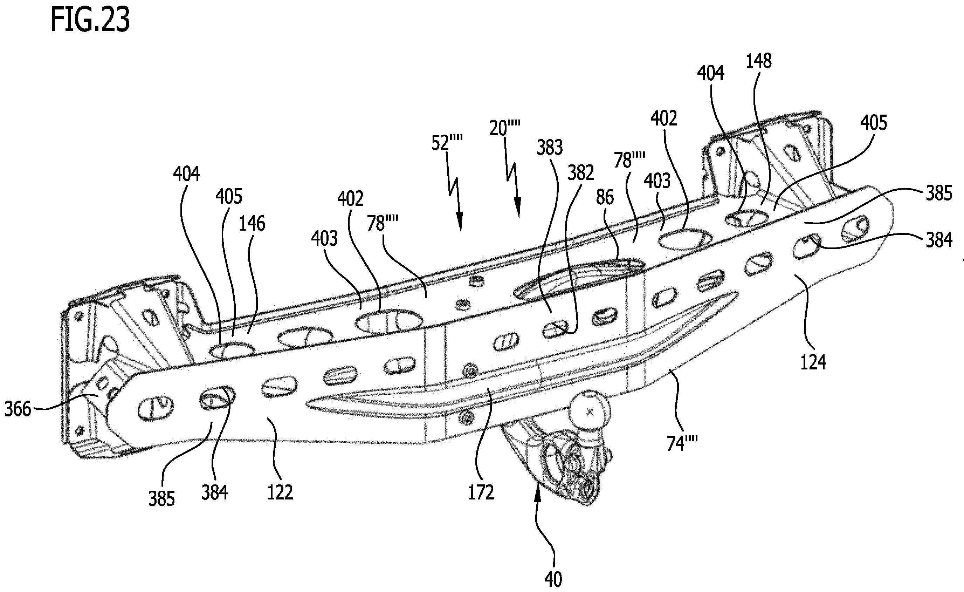

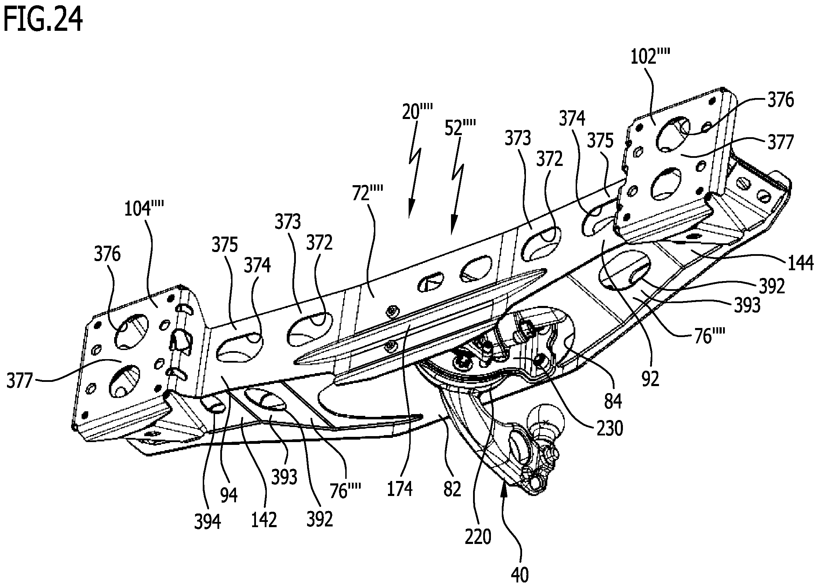

Bei einem fünften Ausführungsbeispiel eines Querträgers 20"", dargestellt in Fig. 23 und Fig. 24, welches vom Grundkonzept her auf den Querträger 20"' gemäß dem dritten Ausführungsbeispiel basiert, sind zur Fortsetzung des Konzepts des Leichtbaus sowohl in dem fahrzeugzugewandten Wandelement 72"" als auch in dem fahrzeugabgewandten Wandelement 74"" und auch in dem fahrbahnzugewandten Wandelement 76"" und dem fahrbahnabgewandten Wandelement 78"" zusätzliche Ausschnitte vorgesehen, welche zur zusätzlichen Gewichtsersparnis führen.

Insbesondere sind dabei in der Zentraleinheit 52"" im Bereich der Erstreckung der Sicke 174 in dem fahrzeugzugewandten Wandelement 72"" Ausschnitte 372 vorgesehen und dann ebenfalls beim Übergang in die Ausläufer 92 und 94 Ausschnitte 374 sowie außerdem in den Stützplatten 102"" und 104"" Ausschnitte 376 vorgesehen (Fig. 24).

In vergleichbarer Weise weist das fahrzeugabgewandte Wandelement 74"" im Bereich der Zentraleinheit 52"" und zwar insbesondere im Bereich der Erstreckung der Sicke 172 aufeinanderfolgend angeordnete Ausschnitte 382 auf und beim Übergang in die Ausläufer 122 und 124 ebenfalls Ausschnitte 384 (Fig. 23).

Auch das fahrbahnzugewandte Wandelement 76"" weist beiderseits der Zugangsöffnung 84 angeordnete Ausschnitte 392 auf, auf welche in den Ausläufern 142 und 144 angeordnete Ausschnitte 394 folgen.

Schließlich weist auch das fahrbahnabgewandte Wandelement 78"" beiderseits der Öffnung 86 Ausschnitte 402 auf, auf welche Ausschnitte 404 in den Ausläufern 146 und 148 folgen.

Um die durch die Ausschnitte 372, 374, 376, 382, 384, 392, 394, 402, 404 eine signifikante Beeinträchtigung der Stabilität der Wandelemente 72, 74, 76, 78 zu vermeiden, ist vorgesehen, dass deren flächenhafte Ausdehnung in jeder Richtung des jeweiligen Wandelements 72, 74, 76, 78 maximal einem 2-fachen der Flächenausdehnung eines den jeweiligen Ausschnitt umgebenden Flächenbereichs 373, 375, 377, 383, 385, 393, 403, 405 in der jeweiligen Richtung entspricht.

Auch bei dem fünften Ausführungsbeispiel kann der Querträger 20"" mit einem Anhängeelement 40, beispielsweise einem schwenkbaren Anhängeelement 40 versehen sein, das wie bei den voranstehenden Ausführungsbeispielen mit der Aufnahmeeinheit 220 an einer in dem Innenraum 82 montierten Montagebasis 230 gehalten ist.

Hinsichtlich der übrigen Merkmale des fünften Ausführungsbeispiels wird insoweit, als diese mit den vorherstehenden Ausführungsbeispielen identischen sind, vollinhaltlich auf die vorhergehenden Ausführungsbeispiele Bezug genommen.

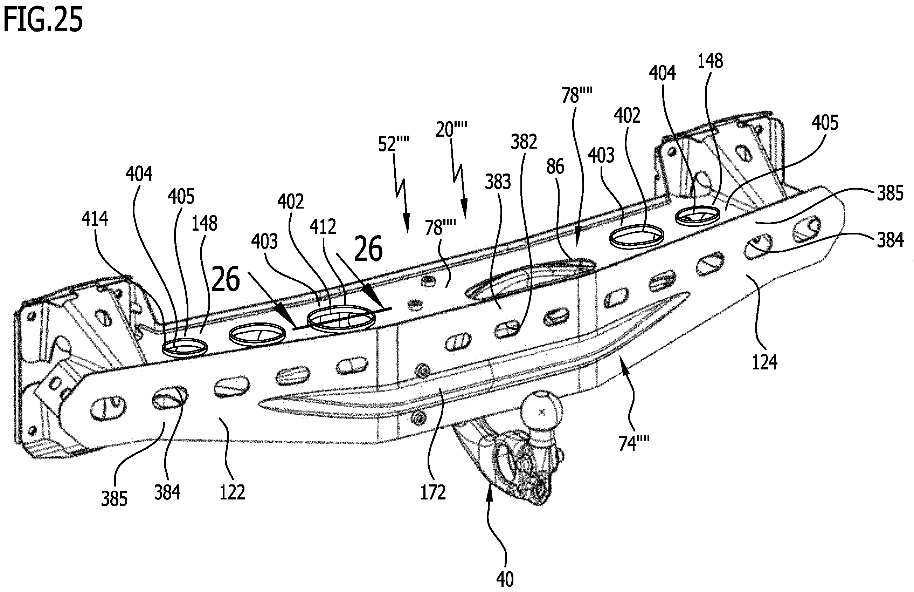

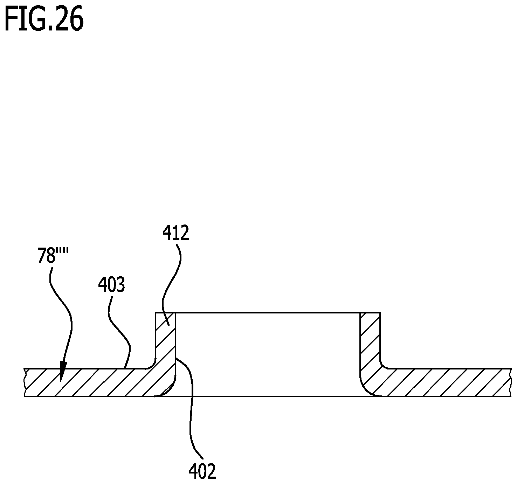

Bei einem sechsten Ausführungsbeispiel, dargestellt in Fig. 25 und Fig. 26 sind beispielsweise die Ausschnitte 402 und 404 mit relativ zu den diese umgebenden Flächenbereichen 403, 405 hochgestellten Randbereichen 412 und 414 versehen, die, wie vergrößert am Beispiel des Randbereiches 412 in Fig. 26 dargestellt, eine Höhe über den Flächenbereich 403 aufweisen, die mindestens dem zweifachen einer Materialdicke des jeweiligen Flächenbereichs 403 entspricht.

Ein derart hochgestellter Randbereich kann aber auch bei allen Ausschnitten 372, 374, 376, 382, 384, 392, 394, 402, 404 vorgesehen sein.

Ferner sind bei dem sechsten Ausführungsbeispiel all diejenigen Elemente, die mit denen der voranstehenden Ausführungsbeispielen identisch sind, mit denselben Bezugszeichen versehen, so dass diesbezüglich vollinhaltlich auf die voranstehenden Ausführungsbeispiele Bezug genommen wird.

Alle voranstehend beschriebenen Ausführungsbeispiele sind insbesondere für Leichtbauausführungen des Querträgers 20 geeignet, so dass die Wandelemente 72, 74, 76, 78 der Kastenstruktur mitsamt den Ausläufern 92, 94, 122, 124, 142, 144, 146, 148 aus Blechen hergestellt werden, deren Wandstärken geringer als 3,5 mm oder weniger, besser 3,0 mm oder weniger, noch besser 2,5 mm oder weniger sind.

Vorzugsweise sind dabei die Bleche aus einem höherfesten Stahl mit einer Zugfestigkeit von mindestens 500 N/m², besser mindestens 600 N/mm² und noch besser mindestens 700 N/mm².

## Patentansprüche

1. Aufprallaufnehmender Querträger (20), der unter einer Stoßfängereinheit (16) einer Fahrzeugkarosserie (12) an einem Fahrzeugheck (14) derselben montierbar ist, wobei der Querträger (20) sich in einer ungefähr parallel zur Stoßfängereinheit (16) verlaufenden Querrichtung (58) erstreckt und endseitig angeordnete Stützelemente (54, 56) zur Abstützung an Stützbereichen (64, 66) des Fahrzeughecks (14) aufweist und wobei die Stützelemente (54, 56) durch eine Zentraleinheit (52) des Querträgers (20) miteinander verbunden sind, **dadurch gekennzeichnet, dass** die Zentraleinheit (52) eine Wandelemente (72, 74, 76, 78) umfassende kastenförmige Struktur (70) aufweist und dass mindestens eines der Wandelemente (72, 74, 76, 78) der kastenförmigen Struktur (70) sich ausgehend von diesem einstückig bis in die Stützelemente (54, 56) erstreckende Ausläufer (92, 94, 112, 114, 142, 144, 146, 148) aufweist, die ein Strukturelement der Stützelemente (54, 56) bilden.

2. Querträger nach Anspruch 1, **dadurch gekennzeichnet, dass** mindestens zwei einander gegenüberliegende Wandelemente der kastenförmigen Struktur (70) sich mit ihren Ausläufern (92, 94, 112, 114, 142, 144, 146, 148) einstückig bis in die Stützelemente (54, 56) erstrecken und zumindest Teile der Struktur der Stützelemente (54, 56) bilden.

3. Querträger nach Anspruch 2, **dadurch gekennzeichnet, dass** mindestens drei Wandelemente (72, 74, 76, 78) der kastenförmigen Struktur (70) sich mit ihren Ausläufern (92, 94, 112, 114, 142, 144, 146, 148) einstückig bis in die Stützelemente (54, 56) erstrecken und zumindest Teile der Struktur der Stützelemente (54, 56) bilden.

4. Querträger nach einem der voranstehenden Ansprüche, **dadurch gekennzeichnet, dass** sämtliche Wandelemente (72, 74, 76, 78) der kastenförmigen Struktur (70) sich mit ihren Ausläufern (92, 94, 112, 114, 142, 144, 146, 148) einstückig bis in die Stützelemente (54, 56) erstrecken und zumindest einen Teil der Struktur, insbesondere die Struktur, der Stützelemente (54, 56) bilden.

5. Querträger nach einem der voranstehenden Ansprüche, **dadurch gekennzeichnet, dass** eines der sich einstückig bis in die Stützelemente (54, 56) erstreckenden Wandelemente (72) mit seinen Ausläufern (92, 94) in jedem der Stützelemente (54, 56) mindestens eine an einem der Stützbereiche (64, 66) des Fahrzeughecks (14) anlegbare Abstützfläche (106, 108) des Querträgers (20) bildet, insbesondere das Wandelement (72) das fahrzeugzugewandte Wandelement (72) der Kastenstruktur (70) ist.

6. Querträger nach Anspruch 5, **dadurch gekennzeichnet, dass** die Abstützflächen (106, 108) des Querträgers (20) in Bezug auf die Zentraleinheit (52) in Richtung des Fahrzeughecks (14) versetzt angeordnet sind und/oder, dass insbesondere die Zentraleinheit (52) relativ zu den Abstützflächen (106, 108) der Stützelemente (54, 56) so angeordnet ist, dass diese, insbesondere mit ihrem fahrzeugzugewandten Wandelement (72), bei an den Stützbereichen (64, 66) anliegenden Abstützflächen (106, 108) im Abstand von dem Fahrzeugheck (14) verläuft.

7. Querträger nach Anspruch 5 oder 6 , **dadurch gekennzeichnet, dass** das Wandelement (72) mit seinen Ausläufern (92, 94) die Abstützflächen (106, 108) aufweisende Stützplatten (102, 104) bildet, insbesondere dass die Ausläufer (92, 94) sich an die Stützplatten (102, 104) anschließende und diese versteifende Umbiegungen (96, 98, 112, 114, 132, 134, 136, 138) bilden und/oder, dass insbesondere die Stützplatten (102, 104) durch von den Ausläufern (92, 94) gebildete innere Umbiegungen (96, 98) mit dem Wandelement (72) im Bereich der Kastenstruktur (70) verbunden sind, insbesondere dass die Stützplatten (102, 104) auf ihrer den inneren Umbiegungen (96, 98) gegenüberliegenden Seiten mit äußeren Umbiegungen (112, 114) verbunden sind und/oder, dass insbesondere die Stützplatten (102, 104) mindestens eine ungefähr parallel zu der Querrichtung (58) erstreckende Umbiegung (132, 134, 136, 138) aufweisen.

8. Querträger nach einem der voranstehenden Ansprüche, **dadurch gekennzeichnet, dass** eines der Wandelemente (74) der kastenförmigen Struktur (70) ein aufprallaufnehmendes Aufprallelement derselben bildet, welches sowohl im Bereich der Zentraleinheit (52) als auch im Bereich der Stützelemente (54, 56) Aufprallflächen bildet und Aufprallkräfte an weitere Wandelemente (72, 76, 78) der kastenförmigen Struktur (70) und an die Stützelemente (54, 56) weiterleitet, insbesondere dass das aufprallaufnehmende Wandelement (74) seinerseits deformierbar ist und/oder, dass insbesondere das aufprallaufnehmende Wandelement (74) das fahrzeugabgewandte Wandelement (74) der kastenförmigen Struktur (70) ist.

9. Querträger nach Anspruch 8, **dadurch gekennzeichnet, dass** das aufprallaufnehmende Wandelement (74) mit mindestens einem dieses ungefähr parallel zur Fahrtrichtung abstützenden Wandelement (76, 78) verbunden ist, insbesondere dass das mindestens eine ungefähr parallel zur Fahrtrichtung abstützende Wandelement (76, 78) mit dem fahrzeugzugewandten Wandelement (72) verbunden ist und/oder, dass insbesondere die kastenförmige Struktur (70) zwei ungefähr parallel zur Fahrtrichtung abstützend wirkende und im Abstand voneinander angeordnete Wandelemente (76, 78) aufweist und/oder, dass insbesondere mindestens eine in Fahrtrichtung abstützend wirkende Wandelement (76) ein fahrbahnzugewandtes Wandelement (76) des Querträgers (20) ist und/oder, dass insbesondere das mindestens eine in Fahrtrichtung abstützend wirkende Wandelement (78) ein fahrbahnabgewandtes Wandelement (78) des Querträgers ist.

10. Querträger nach einem der voranstehenden Ansprüche, **dadurch gekennzeichnet, dass** das mindestens eine in Fahrtrichtung abstützend wirkende Wandelement (76, 78) sich sowohl im Bereich der Zentraleinheit (52) als auch im Bereich der Stützelemente (54, 56) abstützt.

11. Querträger nach einem der Ansprüche 9 bis 10, **dadurch gekennzeichnet, dass** das mindestens eine ungefähr parallel zur Fahrtrichtung abstützend wirkende Wandelement (76, 78) zur Absorption von Aufprallenergie deformierbar ist.

12. Querträger nach einem der voranstehenden Ansprüche, **dadurch gekennzeichnet, dass** das mindestens eine ungefähr parallel zur Fahrtrichtung abstützend wirkende Wandelement (76, 78) sich im Bereich der Stützelemente (54, 56) mit seinen einstückigen Ausläufern (142, 144, 146, 148) an den Stützplatten (102, 104) abstützt, insbesondere dass das mindestens eine ungefähr parallel zur Fahrtrichtung abstützend wirkende Wandelement (76, 78) sich mit seinen einstückigen Ausläufern (142, 144, 146, 148) über Stützflansche (152, 154, 156, 158) an den Stützplatten (102, 104) flächig abstützt, insbesondere dass die Stützflansche (152, 154, 156, 158) gemeinsam mit den Stützplatten (102, 104) mittels beide beaufschlagenden Montagelementen (162, 164) mit den Stützbereichen (64, 66) des Fahrzeughecks (14) verbindbar sind

13. Querträger nach einem der Ansprüche 9 bis 12, **dadurch gekennzeichnet, dass** die einstückigen Ausläufer (142, 144, 146, 148) des mindestens einen ungefähr parallel zur Fahrtrichtung abstützend wirkenden Wandelements (76, 78) einen diesen versteifenden Hohlkörper (302, 304, 306, 308) bilden, insbesondere dass jeweils ein Hohlkörper (302, 304, 306, 308) als Abstützkörper ausgebildet ist und sich an einer der Stützplatten (102, 104) abstützt, insbesondere dass der jeweilige Hohlkörper (302, 304, 306, 308) sich in Richtung der jeweiligen Stützplatte (102, 104) mit zunehmend erweiterndem Querschnitt erstreckt und/oder, dass insbesondere der Hohlkörper (302, 304, 306, 308) als Halbpyramide ausgebildet ist.

14. Querträger nach Anspruch 12 oder 13, **dadurch gekennzeichnet, dass** der Hohlkörper (302, 304, 306, 308) durch mindestens dreifache Umbiegung des jeweiligen Ausläufers (142, 144, 146, 148) gebildet ist und/oder, dass insbesondere der jeweilige Hohlkörper (302, 304, 306, 308) sich mit Flanschelementen (312, 314, 316, 318, 322, 324, 326, 328) an der jeweiligen Stützplatte (102, 104) abstützt, insbesondere dass die Flanschelemente (312, 314, 316, 318, 322, 324, 326, 328) gemeinsam mit der jeweiligen Stützplatte (102, 104) mittels beide beaufschlagende Montageelementen (162, 164) mit den Stützbereichen (64, 66) des Fahrzeughecks (14) verbindbar sind.

15. Querträger nach einem der voranstehenden Ansprüche, **dadurch gekennzeichnet, dass** die kastenförmige Struktur (70) mindestens ein Wandelement (72, 74, 76, 78) aufweist, das mit mindestens einem Ausschnitt (372, 374, 376, 384, 392, 394, 402, 404) versehen ist, insbesondere dass der mindestens eine Ausschnitt (372, 374, 376, 384, 392, 394, 402, 404) eine flächenhafte Ausdehnung aufweist, die in jeder Richtung maximal einem 2-fachen der Flächenausdehnung eines diesen umgebenden Flächenbereichs (373, 375, 377, 383, 385, 393, 403, 405) in der jeweiligen Richtung entspricht und/oder, dass insbesondere der mindestens eine Ausschnitt (372, 374, 376, 384, 392, 394, 402, 404) allseits von dem Flächenbereich (373, 375, 377, 383, 385, 393, 403, 405) umgeben ist und/oder, dass insbesondere der mindestens eine Ausschnitt (372, 374, 376, 384, 392, 394, 402, 404) eine Außenkontur mit einer im Wesentlichen runden und/oder ovalen Grundform aufweist und/oder, dass insbesondere der mindestens eine Ausschnitt (402, 404) bezogen auf den diesen umgebenden Flächenbereich (403, 405) einen relativ zu diesem Flächenbereich (403, 405) hochgestellten Randbereich (412, 414) aufweist, insbesondere dass der hochgestellte Randbereich (412) quer zu dem diesen umgebenden Flächenbereich (403) eine Höhe aufweist, die mindestens dem zweifachen einer Materialdicke des diesen umgebenden Flächenbereichs (403) entspricht.

16. Querträger nach einem der voranstehenden Ansprüche, **dadurch gekennzeichnet, dass** mindestens ein Teil der Wandelemente (72, 74, 76, 78) der kastenförmigen Struktur (70) eine durch Umformungen erhöhte Steifigkeit gegen Deformationen aufweist, insbesondere dass mindestens eines der Wandelemente (72, 74, 76, 78) der kastenförmigen Struktur (70) eine ungefähr parallel zu einer zur vertikalen Längsmittelebene (FL) verlaufende Biegelinie (88) aufweist und/oder, dass insbesondere mindestens eines der Wandelemente (72, 74, 76, 78) mindestens eine eingeprägte Sicke (172, 174) aufweist, insbesondere dass mindestens eine der Wände (72, 74, 76, 78) mindestens eine eingeprägte Sicke (172, 174) aufweist, die sich in einer Querrichtung (58) zur vertikalen Längsmittelebene (FL) erstreckt.

17. Querträger nach einem der voranstehenden Ansprüche, **dadurch gekennzeichnet, dass** die Zentraleinheit (52) derart ausgebildet ist, dass an dieser ein Anhängeelement (40) für einen Anhänger oder einen Lastenträger montierbar ist und dass die durch das Anhängeelement (40) auf die Zentraleinheit (52) übertragenen Kräfte von der Zentraleinheit (52) auf die Stützelemente (54, 56) und von diesen auf die Stützbereiche (64, 66) des Fahrzeughecks (14) übertragen werden, insbesondere dass die kastenförmig ausgebildete Struktur (70) der Zentraleinheit (52) eine Aufnahmeeinheit (220) für das Anhängeelement (40) trägt, insbesondere, dass die Aufnahmeeinheit (220) für das Anhängeelement (40) in der Zentraleinheit (52) angeordnet ist und/oder, dass insbesondere die Aufnahmeeinheit (220) für das Anhängeelement (40) in einem Innenraum (82) der Zentraleinheit (52) angeordnet ist, insbesondere dass eine fahrbahnzugewandte Wand (76) der Zentraleinheit (52) eine Öffnung (84) aufweist, durch welche das Anhängeelement (40) mit der Aufnahmeeinheit (220) in den Innenraum (82) einsetzbar ist und/oder, dass insbesondere das Anhängeelement (40) in seiner Arbeitsstellung (A) die Öffnung (84) durchgreift und/oder, dass insbesondere das Anhängeelement (40) in einer Ruhestellung (R) im Wesentlichen in dem Innenraum (82) der kastenförmigen Struktur (70) der Zentraleinheit (52) angeordnet ist.
